(19) Europäisches Patentamt
European Patent Office
Office européen des brevets

(11) **EP 3 013 563 B1**

(12) **EUROPEAN PATENT SPECIFICATION**

(45) Date of publication and mention of the grant of the patent:
**08.11.2017 Bulletin 2017/45**

(21) Application number: **14745266.8**

(22) Date of filing: **26.06.2014**

(51) Int Cl.:
**B29C 67/00** *(2017.01)*   **B33Y 50/00** *(2015.01)*

(86) International application number:
**PCT/US2014/044458**

(87) International publication number:
**WO 2014/210394 (31.12.2014 Gazette 2014/53)**

(54) **3D PRINTING METHOD AND COMPUTING DEVICE USING ARBITRARY PRINTERS AND ARBITRARY SOFTWARE APPLICATIONS**

3D-DRUCKVERFAHREN UND BERECHNUNGSVORRICHTUNG MIT BELIEBIGEN DRUCKERN UND BELIEBIGEN SOFTWAREANWENDUNGEN

PROCÉDÉ D'IMPRESSION 3D ET DISPOSITIF INFORMATIQUE UTILISANT DES IMPRIMANTES ARBITRAIRES ET DES APPLICATIONS LOGICIELLES ARBITRAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2013 US 201313928287**

(43) Date of publication of application:
**04.05.2016 Bulletin 2016/18**

(73) Proprietor: **Microsoft Technology Licensing, LLC Redmond, WA 98052 (US)**

(72) Inventors:
• **MCGATHA, Jesse**
  **Redmond, Washington 98052-6399 (US)**
• **FENELON, Michael**
  **Redmond, Washington 98052-6399 (US)**
• **IVERSON, Kristofer**
  **Redmond, Washington 98052-6399 (US)**
• **JIN, Yulin**
  **Redmond, Washington 98052-6399 (US)**
• **IVANOV, Hristo**
  **Redmond, Washington 98052-6399 (US)**
• **PETERSON, Erik**
  **Redmond, Washington 98052-6399 (US)**
• **YUE, Feng**
  **Redmond, Washington 98052-6399 (US)**

(74) Representative: **Goddar, Heinz J. et al**
  **Boehmert & Boehmert**
  **Anwaltspartnerschaft mbB**
  **Pettenkoferstrasse 22**
  **80336 München (DE)**

(56) References cited:
  **EP-A2- 1 376 331      US-A1- 2009 303 507**
  **US-A1- 2012 224 755**

**Description**

**BACKGROUND**

Various types of devices such as additive printers, computer numerical control (CNC) mills, laser cutters, photopolymerizers, and others are currently used for 3D manufacturing. Manufacturing systems for these 3D manufacturing devices are typically vertical solutions, meaning content-producing software is generally required to understand and produce the exact printer language that a particular target 3D manufacturing device implements. In other words, content-producing software is often coded to be specific to a particular 3D manufacturing device.

As only the inventors have observed, this tight dependency constrains content-software vendors from producing 3D models that are rich and device-neutral. As only the inventors have observed, this close coupling between 3D manufacturing devices and the software for producing and preparing content also constrains producers of 3D manufacturing devices from innovating. A device maker may not be able to make modify its hardware with improvements due to the need to maintain interoperability with existing content-producing software.

Currently, there is not a systemic mechanism to ensure that users can obtain consistent results when preforming 3D manufacturing, regardless of which content-producing software or 3D manufacturing device is used.

US 2012/0224755 A1 shows techniques of using 3D printers to create physical models from image data in accordance with the respective preambles of claims 1, 3 and 8. Geometric representations of different physical models are described and complex data conversion processes that convert input image data into geometric representations compatible with third party 3D printers are disclosed. Printing templates are used to encapsulate complex geometric representations and complicated data conversion processes from users for fast and simple 3D physical model printing applications.

EP 1 376 331 A2 relates to a system for users of mobile computing devices to print documents. A print service is provided on a network for mobile computing devices to print documents. When the user of a mobile device wants to print a document, the mobile device is used to access the print service and send a print request that specifies the location the document on the network in terms of URL. In response, the print service validates the print request, retrieves the document, renders the document for printing, and prints the document as requested by the user. Alternatively, the document may be directly provided by the mobile device to the print service.

US 2009/0303507 A1 relates to a system for printing a 3D object on a three-dimensional (3D) printer are described. The methods semi-automatically or automatically delineate an item in an image, receive a 3D model of the item, matches said item to said 3D model, and send the matched 3D model to a 3D printer.

**SUMMARY**

The invention is defined by the subject matter of the independent claims. Advantageous embodiments are subject to the dependent claims.

The following summary is included only to introduce some concepts discussed in the Detailed Description below. This summary is not comprehensive and is not intended to delineate the scope of the claimed subject matter, which is set forth by the claims presented at the end.

Embodiments described herein relate to an operating system configured to enable arbitrary applications to output 3D models to be physically formed by arbitrary 3D manufacturing devices. The operating system manages the 3D manufacturing devices, including installation of related software, device drivers, device properties, and so forth. The operating system also provides a path or application programming interface (API) through which the arbitrary applications pass arbitrary print jobs (or documents) of 3D models, in a standard format, to the 3D manufacturing devices. The operating system handles queuing and spooling on behalf of the applications and the 3D manufacturing devices. Drivers of the 3D manufacturing devices are managed by the operating system and may translate the 3D models outputted by the applications (in the standard format) to instructions or device-language content that is specific to the respective 3D manufacturing devices.

Many of the attendant features will be explained below with reference to the following detailed description considered in connection with the accompanying drawings.

**BRIEF DESCRIPTION OF THE DRAWINGS**

The present description will be better understood from the following detailed description read in light of the accompanying drawings, wherein like reference numerals are used to designate like parts in the accompanying description.

Figure 1 shows an overview of an operating system serving as an intermediary for 3D manufacturing.

Figure 2 shows a detailed example of an operating system providing beginning-to-end 3D manufacturing support.

Figure 3 shows a process for installing and configuring an arbitrary 3D manufacturing device for operating system management.

Figure 4 shows an example process of any arbitrary application using the operating system to have 3D content manufactured by a 3D manufacturing device.

Figure 5 shows an example of a computing device on which embodiments described above may be implemented.

## DETAILED DESCRIPTION

Embodiments discussed below relate to operating system level support for 3D manufacturing. Discussion will begin with an overview of how an operating system can act as an intermediary between 3D content-producing software and 3D manufacturing devices. Details of an example printing system are described next. An example 3D model format and schema for sharing device information is the discussed, followed by explanation of example print flow processes.

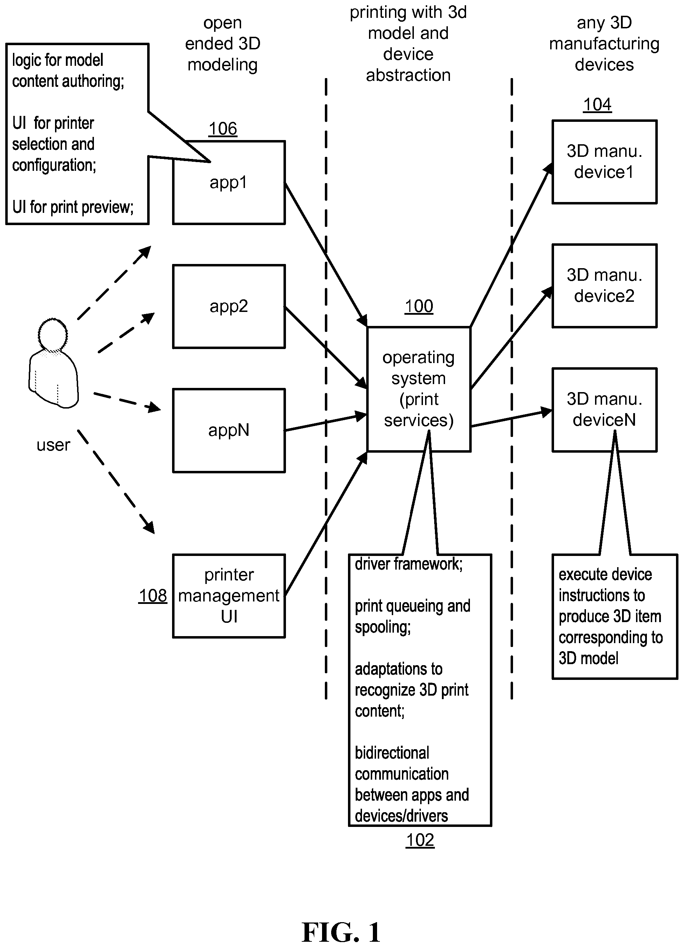

Figure 1 shows an overview of an operating system 100 serving as an intermediary for 3D manufacturing. The operating system 100 provides various support functions 102 such as a driver framework, print queuing and spooling, bidirectional communication with 3D manufacturing devices 104, and others. The operating system 100, as adapted for 3D manufacturing support, allows any arbitrary application 106 to print 3D content to any arbitrary 3D manufacturing device 104. That is, the 3D content is decoupled from the 3D manufacturing.

A 3D manufacturing device 104 may be any of a variety of devices that add (by deposition, layering, etc.) or remove (by cutting with bits, lasers, high pressure liquid jets, etc.) raw material to form 3D physical objects. Additive 3D printers and CND mills are two types of 3D manufacturing devices. As mentioned in the Background, other types of 3D manufacturing devices may be used, for instance, photopolymerizers. Some 3D manufacturing devices may not add or remove material but rather may alter or etch the internal content of a solid material using particle beams, lasers, electromagnetic signals, and so forth. Generally, 3D manufacturing devices 104 can produce physical equivalents of arbitrary 3D models, though not all possible 3D models can be manufactured; most 3D manufacturing devices have practical limits that impose constraints or requirements that printable 3D models may meet.

An application 106 can be any type of software running on a computing device. Generally, an application 106 can be any source providing and/or generating 3D model content in any arbitrary form. An application 106 might in some instances be a model authoring application having a user interface (UI) with which a user interacts to build a 3D model, often in some proprietary internal 3D format designed for efficient interactive manipulation and rendering. Computer aided design (CAD) software and modelling or animation software are examples of applications 106 that might use the operating system 100 to print 3D content to a 3D manufacturing device 104.

An application 106, when printing via the operating system 100, outputs its 3D model in a standard 3D print format (described in detail further below) similarly outputted by any of the applications 106 (or other print sources). An application 106 that uses a non-standard 3D format or data structure might translate its 3D model to the standard 3D print format. In one embodiment, the standard 3D print format is defined by a standard schema that includes a 3D model element (possibly encompassed by a standard package format for packaging multiple files). It may be possible, in some implementations, to extend an existing print schema with definitions for 3D models and related data. When an application 106 is to print to a 3D manufacturing device 104, the application 106 may export its internal 3D model data (e.g., CAD model data) to the 3D print format specified for use by the operating system 100, which might be packaged in the standard package format. Such a print package or job containing 3D model content might also include a print ticket or other 3D manufacturing device metadata supplied by the operating system 100, such as an identifier of a target or destination 3D manufacturing device 104, information about how the destination 3D manufacturing device 104 is to be configured, print preferences, transformations such as scaling, etc.

To enable an application 106 to select and configure a 3D manufacturing device 104, the operating system 100 may have facilities or application programming interfaces (APIs) that an application 106 can use to obtain information about any of the 3D manufacturing devices available through the operating system 100. The operating system 100 may have various conventions for recognizing and managing devices such as printers. Those conventions may be configured or extended to allow 3D manufacturing devices 104 to be treated as first-class printer objects in the operating system 100. Thus, any 3D manufacturing device may be managed and used in ways familiar to the user and with consistency across different applications 106 and different 3D manufacturing devices 104. Such device management and selection may be done through user interfaces provided by the applications 106 (perhaps with common elements provided by the operating system 100), with device information populated with information obtained through services or components of the operating system 100.

Device selection and management may also be performed by a user, in a consistent way, by using a printer management user interface 108 through which any arbitrary 3D manufacturing device 104 might be installed, configured, controlled, and queried for device and/or job information or state. The printer management user interface 108 might also serve as a common point for updating drivers for 3D manufacturing devices 104, checking for firmware updates (via a network and remote support infrastructure into which the operating system 100 is tied), and so forth. In embodiment, the printer management user interface 108 is also used to manage 2D printers. In sum, a user can manage and use 3D manufacturing devices without concern for the particular devices and software to be employed.

The operating system 100 receives print packages or documents containing instances of 3D models in the standard 3D print format and with information identifying destination 3D manufacturing devices 104 and possibly device or job settings or preferences. The operating system 100 may handle queuing and spooling of those 3D print packages and direct them to appropriate device drivers, and ultimately the appropriate 3D manufacturing devices 104, where they are executed to manufacture the 3D models in the payloads of the print packages.

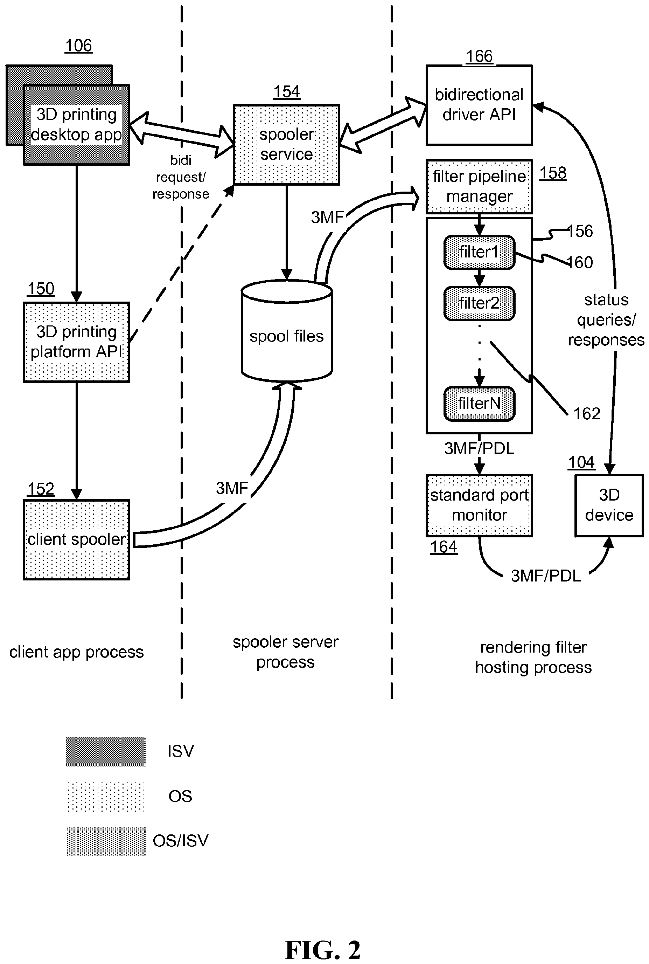

Figure 2 shows a detailed example of an operating system providing beginning-to-end 3D manufacturing support. As discussed above, an application 106 has a 3D model in any internal form. The application 106 (which can be any arbitrary application) is coded with calls to a 3D printing API 150 of the operating system. The 3D printing API 150 provides various print related functions, methods, interfaces, etc. For example, the 3D printing API 150 may include functions or methods for starting print jobs, creating standardized print packages for the print jobs (e.g., Open XPS (XML Paper Specification) packages), initiating and building standardized print documents (e.g., XPS documents) with 3D model content, querying and managing print jobs and print queues, and so forth. It is possible to modify or extend an existing printing framework to accommodate 3D printing, in which case 3D print jobs may share a same workflow as ordinary 2D print jobs. That is print queues, spoolers, etc., can be configured to process both 2D print jobs and 3D print jobs.

Regarding standard document formats for printing, each application 106 may be configured to output 3D model data into a same standard document format to be referred to as a 3D document format (3MF). In one embodiment a 3MF document standard may be implemented by an extension to the Open XPS specification that includes 3D model data. Other standards may be used, such as the Portable Document Format (PDF) as extended to allow embedding of Universal 3D files (multiple standards may be supported by one operating system). Because many 3D manufacturing devices work with stacks of 2D slices, the 3MF may be defined to allow applications to specify a variety of standard forms of 3D models, including both slice models (vector and/or bitmap graphics) as well as 3D mesh models, parametric 3D models, and so forth. In the case of slice models, slices may be described in bitmap or vector form. For additional details, see the "3D Manufacturing Format" (MS-TDPRP) published by Microsoft Corporation (see Appendix).

Returning to the 3D printing API 150, the 3D printing API may include helper functions for formatting 3MF documents and print packages so that an application may avoid having to work with XML code directly. The application need only be able to generate standard 3D content (e.g., standard-conformant mesh or slice models) for a 3MF document. The 3D printing API 150 may also be used to obtain a print ticket or other printer specification information that is packaged with a 3MF document for printing. A print ticket might specify a particular 3D manufacturing device and configuration settings for the device or the print job. To allow an application to specify a 3D manufacturing device as a printing destination, the printing framework of the operating system may be extended to allow for recognition of such devices, for example as a new system device type. In addition, operating system components, services, etc. for sharing device information may be extended to include settings and state of 3D manufacturing devices.

Once the application has prepared a print package, print job, 3DF document, or the like is passed to a spooling system. The spooling system may involve a local client spooler 152 and/or a spooler service 154. If the spooler service 154 is on another computing device, then the client spooler 152 handles passing of the print package to the spooler service 154. If the destination 3D manufacturing device is a local device (e.g., connected via a local Universal Serial Bus, a local network, or the like) then the spooler service 154 may be on the local host and the application 106 may communicate directly with the spooler service 154 via the 3D printing API 150. Other configurations for spooling of 3D print jobs may be used by the operating system 100.

The spooler service 154 may identify which 3D manufacturing device a 3D print package/document/job (sometimes "job" or "print job" for short) is destined for, select a corresponding device driver 156 (or an API thereof), possibly load the driver and/or an interface thereof, and then stream the 3D print package/document/job to the driver 156. The spooler service 154 might include or communicate with a filter pipeline manager 158. The filter pipeline manager 158 may perform tasks such as: loading and initializing filters 160 (described by a filter configuration file used to create a filter pipeline 162); managing data exchange between the filters 160 as the print package/job/document is processed; unloading filters 160 when a print package/job/document is finished; and initializing properties of the print pipeline 162.

A driver for a 3D manufacturing device generally handles rendering or conversion of the device-neutral standard-format 3D model content of a 3D print package/job/document into machine instructions (or code) executable or interpretable by the corresponding 3D manufacturing device; such code or instructions may be in a language implemented by the device. For example, a driver might be coded to understand the syntax and semantics of the standard 3D model format and convert a 3D model in such format to machine executable manufacturing instructions (for example in the form of G-Code or a proprietary printer description language (PDL)) supported by the 3D manufacturing device. The driver then passes those instructions to a standard communication port 164 or other communication channel through which the machine manufacturing instructions flow to a communication interface of the destination 3D manufacturing device. The driver 156 may also use device metadata (e.g., a print ticket) included with the 3D print job being processed when generating machine instructions.

In an embodiment where filter pipelines (or drivers capable of being configured with pluggable modules) are implemented, filters may perform functions such as geometric transformations, integrity checking of the 3D model, optimizing the machine instructions, correcting model deficiencies (e.g., making a model "watertight"), etc. Drivers and possibly filters may be provided by vendors of 3D manufacturing devices and may be installed and managed by the operating system 100. An installation package for a 3D manufacturing device may also include metadata about the device that is installed and used by components of the operating system.

Device metadata may be supplied in the form a document (e.g., XML) that conforms to a print schema definition extended to include a namespace, keywords, and/or elements that are helpful for 3D manufacturing devices. Such a schema might define or assume a specific coordinate space and print/manufacture resolution. The schema might also define device attributes or parameters (perhaps as keywords) related to 3D manufacturing device tools and their properties, such as a material type or color, an initial or default tool, a tool type, etc. The schema may also include device configuration properties and settings such as an area capable of manufacture, a depth of that area, tool temperature, build platform temperature, device language (possibly with a value set such as 3MF, stereolithography, Additive Manufacturing Format, GCode, bitmap, etc.), material-type information, filament information such as diameter and feed rate, nozzle diameter, tool travel rate, quality (e.g. draft, medium, high resolution), density, slice height, shell/wall count, support options (scaffolding added for overhangs and so forth), raft support, and others.

A device-capability document compliant to such a schema can be used by the operating system to convey device information where needed by applications, drivers, or components of the operating system. For instance, as noted above, such a document or schema-conforming data can be used to convey capabilities of a 3D manufacturing device. A compliant document may also be used to convey capability or state information to an application 106 through a bidirectional driver/API 166, to a driver, to the spooler service, or elsewhere. In addition, print tickets or other documents that comply with the schema can be used to specify device settings or manufacture/job settings that are consistent with the destination device.

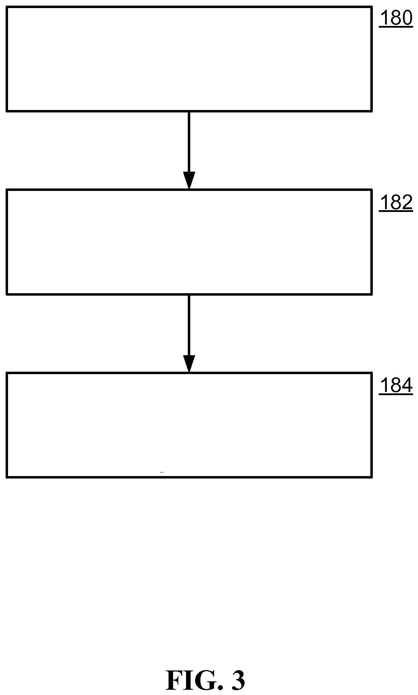

Figure 3 shows a process for installing and configuring an arbitrary 3D manufacturing device for operating system management. When an install event occurs at step 180, such as an explicit user command or operating system detection of a new device, the operating system obtains at step 182 software for the 3D manufacturing device. The software or other installation components may be obtained from local media or from a network service. The software, e.g., drivers, filters, custom management applications, etc. are installed. The operating system adds the new device to a device tree or the like that represents various types of devices managed by the operating system, and performs other tasks to register the 3D manufacturing device.

When finished, at step 184 the 3D manufacturing device becomes available as a device object managed by the operating system (possibly as a printer device). In one embodiment, the new 3D manufacturing device is treated as a first-class printer object by the operating system. In other words, infrastructure of the operating system that supports 2D printers may support 3D manufacturing devices; 2D and 3D printing device information may co-exist in device management components. System-provided UI for managing and configuring 2D printers may also be used for managing and configuring 3D printers. When an application queries for available devices or properties the installed 3D manufacturing device may now have visibility to the application.

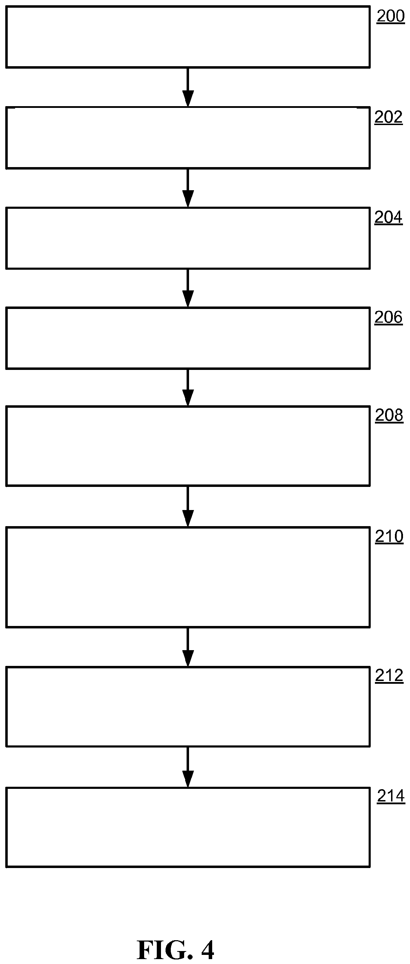

Figure 4 shows an example process of any arbitrary application using the operating system to have 3D content manufactured by a 3D manufacturing device. As discussed earlier, an application may have logic for authoring 3D content. At step 200 the application queries the operating system to discover available devices for 3D manufacturing. At step 202 the application may display a user interface to allow a user to select and/or configure a 3D manufacturing device, with the user interface displaying options and settings conveyed by the operating system. At step 204 the application responds to a user "print" command by exporting its 3D model to a standard 3D document format (step 206). At step 208 the operating system begins managing the exported 3D document, perhaps in the form of a print job. This may involve queuing the print job, spooling the print job, possibly sending the print job over a network to a destination network spooler, and so forth.

At step 210, when the print job or standard 3D document is up (e.g., the destination 3D manufacturing device becomes available), the operating system may examine the print job and according to same load and/or configure a device driver, and pass the 3DF or standard-conforming 3D document to the device driver. At step 212 the device driver may parse the received 3D model data and translate the 3D document into a format, language, or instruction set for the destination 3D manufacturing device. An embodiment may be implemented to enable pass-through printing. This may involve an application outputting a document that is directly consumable by the destination 3D manufacturing device (e.g., 3MF or machine instructions). Nonetheless, filters in a driver might be applied to transform the document per state or settings of the destination device. At step 214 the operating system passes the output of the driver to the corresponding 3D manufacturing device, which executes the driver output to produce a physical object corresponding to the application's 3D model.

Regarding the standard 3D document format, in one embodiment such a format may include conventions to allow textures of a 3D model to be broken out into separate files or parts (within a print package). The 3D model may have references to the files where the corresponding textures are used in the model. This approach may be helpful in that when the 3D model needs to be processed at any stage needless parsing of texture data can be avoided. As noted, a 3D model may be conveyed in mesh form (triangles). With this approach, slicing logic may be performed by the device driver, which might also perform mesh repair, support structure addition (physical additions to the physical output). It may be noted that the operating system may manage execution lifetime of the device driver such that a job, which may take hours or days to complete, is not interrupted by termination of the source application, or by a user logging out of the host device, etc.

By providing 3D manufacturing support at the operating system level some types of print-related functions may become possible. For example, the operating system may be able to identify substitute or compatible 3D manufacturing devices and direct a job to a 3D manufacturing device other than one specified by an application. Similarly, the operating system may manage a large array of 3D manufacturing devices and distribute jobs among them for load balancing or the like. The support infrastructure may be able to perform other optimizations. For example, a spooling service may analyze multiple discrete print packages and combine 3D objects in those packages into a single 3D model or into a set of machine instructions that allow those objects to all be printed by the 3D manufacturing device at the same time.

In another embodiment, a remote 3D manufacturing device can be targeted by a local application by using a special device driver instead of a network print queue. A device driver might emulate a 3D manufacturing device but communicate with a network or cloud service for remote execution.

The use of the operating system as a go-between for applications and 3D manufacturing devices can also allow for previewing the appearance that a physical object would be expected to have if a specified 3D manufacturing device (and perhaps specific settings therefor) were used for a specific 3D model. For such a preview, an application may pass its 3D model through the corresponding device driver and output from the driver translating the 3D model may be passed back to the application for graphic rendering. The preview process may also be a convenient time for the driver, when processing the 3D model, to estimate an amount of necessary raw material. The application can use the preview information and possibly information from the device about available material to determine if the print job is possible or whether settings of the job may be altered to use less material. Such preview logic, since provided by the operating system, may be available for any application in combination with any 3D manufacturing device.

The operating system support for bidirectional communication between applications and 3D manufacturing devices (and/or their drivers) can be used by an application to obtain information about a 3D manufacturing device and possibly to send instructions to the 3D manufacturing device. Such a communication path can be used to obtain device temperature, query how much material (e.g., raw plastic) the 3D manufacturing device has available for production, instruct a device to calibrate, etc. Bidirectional communication may even be used for control of a device while the device is producing. For example, if multiple discrete objects are being produced at a same time, the application might instruct the device to cancel production of a specific object, possibly by updating or revising machine instructions as they are flowing to the device.

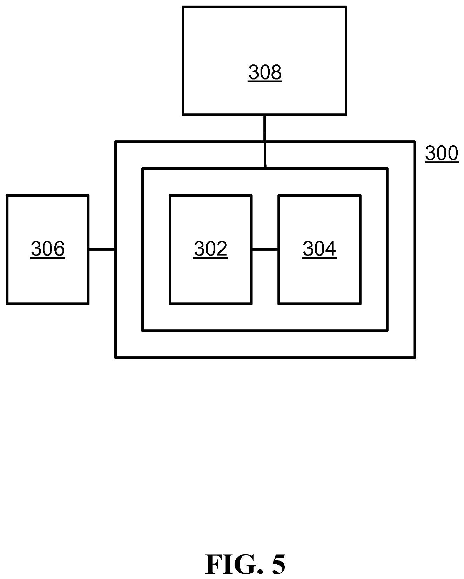

Figure 5 shows an example of a computing device 300 on which embodiments described above may be implemented. The computing device 300 may have a display 308 as well as storage 302 and a processor 304. These elements may cooperate in ways well understood in the art of computing. In addition, input devices 306 may be integrated with or in communication with the computing device 300. The computing device 300 may have any form factor or may be used in any type of encompassing device. The computing device 300 may be in the form of a handheld device such as a smartphone, a tablet computer, a gaming device, a server, or others.

Embodiments and features discussed above can be realized in the form of information stored in volatile or non-volatile computer or device readable devices. This is deemed to include at least devices such as optical storage (e.g., compact-disk read-only memory (CD-ROM)), magnetic media, holographic storage, flash read-only memory (ROM), or other devices for storing digital information. The stored information can be in the form of machine executable instructions (e.g., compiled executable binary code), source code, bytecode, or other information that can be used to enable or configure computing devices to perform the various embodiments discussed above. This is also deemed to include at least volatile memory such as random-access memory (RAM) and/or virtual memory storing information such as central processing unit (CPU) instructions during execution of software carrying out an embodiment, as well as non-volatile devices storing information that allows a program or executable to be loaded and executed. The embodiments and features can be performed on any type of computing device, including portable devices, workstations, servers, mobile wireless devices, and so on.

## APPENDIX

This Appendix (and its' Glossary) is included only as an example of one possible standard 3D document format. Variations and other formats may be used with the embodiments described above. One such variation, for standardization, would use the term "MUST" in place of the term "MAY". Requirements or prohibitions of a schema described in this Appendix, whether implicit or explicit, are exemplary only and are not required for variations or other implementations of 3D document formats that can be used with the embodiments described above.

In addition, tables for "attributes" may include columns headed "use", "default", or "fixed". Omission of any such column indicates no requirement.

**Chapter 1: 3MF Document Format**

This specification describes how the 3MF Document format is organized internally and realized in 3D objects externally. It can be used as a stand-alone file format or as a payload in a print pipeline. It is built upon the principles described in the Open Packaging Conventions specification. The information presented here is intended both for producers, which emit content in the 3MF Document format, and consumers, which access and transform into 3D objects the contents of a 3MF document. An editor is an entity that acts as both a producer and a consumer of content in the 3MF Document format.

The 3MF Document format represents a 3D model, or a representation of one or more physical object descriptions in a markup format. A file that implements this format may enable a consumer to generate a physical object through additive manufacturing or subtractive manufacturing techniques. This includes resources such as textures that might be used to reproduce the exact desired appearance in terms of color or internal structures in terms of materials.

This format also includes optional components that build on the minimal set of components required to generate a physical object. This includes the ability to specify print job control instructions, to describe assembly of objects intended to be generated simultaneously in an interlocked or disjoint manner, or place pre-built components into the output, among others.

Finally, the 3MF Document format implements the common package features specified by the Open Packaging Conventions specification that support digital signatures and core properties.

How This Specification Is Organized

| Chapter | Description |
|---|---|
| 3MF Document Format | Introduction to the 3MF Document file format and overview of basic package requirements. |
| Parts and Relationships | Describes the Open Packaging Convention package parts and relationships in a 3MF Document. |
| 3D Models | Introduces the primary organization of a 3MF Document into resources and build instructions. |
| Objects | This chapter describes how objects are defined by triangular mesh or geometric slices. |
| Textures, Colors, and Materials | This chapter provides detailed information about how resources, including textures, colors, and materials, are defined. These resources are used in turn by objects to complete a 3D object definition. |
| Metadata | Metadata allows producers to add additional information to many elements within 3MF Document markup. |
| Package Features | Describes the 3MF Document features provided by the Open Packaging Conventions, including thumbnails, digital signatures, and core properties. |
| Protected Content | Protected content allows producers to secure resources in a 3MF Document so that only authorized consumers can access and manufacture the object(s). |
| Glossary | A full summary and definition of all glossary terms introduced in this specification. |
| XSD Schema | The schema for the 3D Model part. |
| Standard Namespaces & Content Types | A reference on the standard namespaces and content types for 3MF Documents. |

**1.1. Package**

The 3MF Document format may use a ZIP archive for its physical model. The Open Packaging specification describes a packaging model, that is, how the package is represented internally with parts and relationships.

The 3MF Document format includes a well-defined set of parts and relationships, each fulfilling a particular purpose in the document. The format also extends the package features, including digital signatures and thumbnails.

## Chapter 2. Parts and Relationships

The packaging conventions described in the Open Packaging Conventions (OPC) specification can be used to carry any payload. A payload is a complete collection of interdependent parts and relationships within a package. This specification defines a particular payload that contains a 3D object definition and its supporting files: the 3D payload.

An OPC package that holds a 3D payload and follows the rules described in this specification is referred to as a 3MF Document. Producers and consumers of 3MF Documents can implement their own parsers and manufacturing devices based on this specification.

### 2.1. 3D Payload

A payload that has a 3D Model root part is known as a 3D payload. There can be more than one 3D payload in a 3MF Document, but only one primary 3D payload.

A specific relationship type is defined to identify the root of a 3D payload within a 3MF Document: the 3MF Document StartPart relationship. The primary 3D payload root is the 3D Model part that is referenced by the 3MF Document StartPart relationship to find the primary 3D payload in a package. The 3MF Document StartPart relationship MAY point to the 3D Model part that identifies the root of the 3D payload.

The payload includes the full set of parts required for processing the 3D Model part. All content to be used to manufacture an object described in the 3D payload MAY be contained in the 3MF Document. The parts that can be found in a 3MF Document are listed in Table 2-1. Relationships and content types for these parts are defined in Appendix C, "Standard Namespaces and Content Types." Each part MAY use *only* the appropriate content type specified in Appendix C.

*Table 2-1. 3MF Document parts*

| Name | Description | Required/Optional |
|---|---|---|
| 3D Model | Contains the description of one or more 3D objects for manufacturing. | REQUIRED |
| 3D Texture | Contains an image file used to apply color or material structures to a 3D object in the 3D Model part. | OPTIONAL |
| Core Properties | The OPC part that contains various document properties. | OPTIONAL |
| Digital Signature Origin | The OPC part that is the root of digital signatures in the package. | OPTIONAL |
| Digital Signature | OPC parts that each contains a digital signature. | OPTIONAL |
| Digital Signature Certificate | OPC parts that contain a digital signature certificate. | OPTIONAL |
| PrintTicket | Provides settings to be used when outputting the 3D object(s) in the 3D Model part. | OPTIONAL |
| Thumbnail | Contains a small JPEG or PNG image that represents the 3D objects in the package. | OPTIONAL |

*Figure 2–1. A typical 3MF Document*

### 2.1.1.3D Payload Relationships

Parts included to the 3D payload are explicitly linked to the 3D payload root by relationship. 3MF Documents MAY NOT reference resources external to the 3MF Document package. For more information on relationships, see the Open Packaging Conventions specification.

Parts in the 3D payload MAY use exactly one of the appropriate relationships described below to establish that relationship between two parts in the payload. Relationship types are defined in Appendix C, "Standard Namespaces and Content Types."

*Table 2-2. 3MF Document relationships*

| Name | Description | Required/Optional |
|---|---|---|
| 3D Texture | Relationship from a 3D Model part to a 3D Texture part. | REQUIRED for each 3dTexture part |
| Core Properties | Relationship from the package to the Core Properties part. | REQUIRED |
| Digital Signature Origin | Relationship from the package to the Digital Signature Origin part. | OPTIONAL |
| Digital Signature | Relationship from the Digital Signature Origin part to a Digital Signature XML Signature part. | OPTIONAL |
| Digital Signature Certificate | Relationship from a Digital Signature XML Signature part to a Digital Signature Certificate part | OPTIONAL |
| PrintTicket | Relationship from a 3D Model part to a PrintTicket part. | REQUIRED for the Model PrintTicket |
| StartPart | Relationship from the package to the 3D Model part that is the primary fixed payload root. | OPTIONAL |
| Thumbnail | Relationship from the package to a Thumbnail part. | OPTIONAL |

Producers that generate a relationship MAY include the target part in the 3MF Document for any of the following relationship types: PrintTicket, 3D Texture, StartPart, and Thumbnail Consumers that access the target part of any relationship with one of these relationship types MAY generate an error if the part is not included in the 3MF Document.

**2.1.2.3D Model Part**

The 3D Model part contains definitions of one or more objects to be fabricated by 3D manufacturing processes. The 3D Model part is the only valid root of a 3D payload.

A 3D Model part has two sections: a set of resource definitions that include textures, colors, materials, and objects, as well as a set of specific items to actually build. Textures reference other 3D Texture parts in the 3D payload by relationship id.

The content type of the 3D Model part is defined in Appendix C, "Standard Namespaces and Content Types."

**2.1.3.3D Texture Parts**

3D Texture parts are image files that are used by objects in the 3D Model part to apply colors and materials to an object. A single 3D Texture may be shared among multiple objects. 3D Textures referenced in the 3D Model part MAY be internal to the package. These 3D Texture parts MAY be in either JPEG, PNG, TIFF, or Texture Bitmap (TBMP) format.

3D Textures are identified in the 3D Model part by the <texture> element, which identifies the path to the 3D Texture part. There MAY also be a relationship from the 3D Model part to the 3D Texture part. See Section C.2, "Relationship Types" for the 3D Texture relationship type. The content type of the 3D Texture part is specified as a fixed value in Appendix C, "Standard Namespaces and Content Types"; however, the real underlying content type is defined as an attribute in the XML markup.

**2.1.3.1. JPEG Images**

JPEG image parts MAY contain images that conform to the JPEG specification. Consumers SHOULD support JPEG images that contain APP0, APP2, APP13, and APP14 markers. Consumers MAY support JPEG images that contain the APP1 marker and interpret the EXIF color space correctly.

*Table 2-3. Supported JPEG APPn markers*

| APPn Marker | Originating source |
|-------------|--------------------|
| APP0 | JFIF specification |
| APP1 | EXIF extension defined by JEITA |
| APP2 | ICC profile marker defined by the ICC specification |
| APP13 | Photoshop 3.0 extension |
| APP14 | Adobe DCT Filters in PostScript Level 2 extension |

CMYK JPEG images MAY NOT be used.

**Note:** If both APP2 and APP13 markers are specified, the APP2 marker takes precedence.

**2.1.3.2. PNG Images**

PNG image parts MAY contain images that conform to the PNG specification.

*Table 2-4. Support for ancillary PNG chunks*

| Chunk | Support Level |
|-------|---------------|
| tRNS | MAY Support |
| iCCP | MAY Support |
| sRGB | MAY Ignore |
| cHRM | MAY Ignore |
| gAMA | MAY Ignore |
| sBIT | MAY Ignore |

**2.1.3.3. TIFF Images**

TIFF image parts MAY contain images that conform to the TIFF specification. 3MF Document consumers MAY support baseline TIFF 6.0 with some extensions, as noted in Table 2-5. These tags MAY be supported for the specified image types. Consumers MAY support JPEG-compressed raster data in TIFF image parts, indicated using a value of 7 stored in the Compression field as a binary value. When the Compression field has the value 7, each image strip or tile contains a complete JPEG datastream which is valid according to ITU-T T.81 (ISO/IEC 10918-1). If consumers encounter a tag that is not included below, they SHOULD ignore that tag.

*Table 2-5. Supported TIFF tags*

| Image type | Tags |
|---|---|
| Bilevel images | PhotometricInterpretation (0 and 1)<br>Compression (1, 2, 3, 4, 5, or 32773)<br>ImageLength<br>ImageWidth<br>ResolutionUnit (1, 2, or 3)<br>RowsPerStrip<br>StripByteCounts<br>StripOffsets<br>XResolution<br>YResolution |
| Grayscale images | PhotometricInterpretation (0 and 1)<br>BitsPerSample (4, 8, or 16)<br>Compression (1, 5, 7, or 32773)<br>ImageLength<br>ImageWidth<br>ResolutionUnit (1, 2, or 3)<br>RowsPerStrip<br>StripByteCounts<br>StripOffsets<br>XResolution<br>YResolution |
| Palette color images | BitsPerSample (1,4, or 8)<br>ColorMap<br>Compression (1, 5, or 32773)<br>ImageLength<br>ImageWidth<br>PhotometricInterpretation (3)<br>ResolutionUnit (1, 2, or 3)<br>RowsPerStrip<br>StripByteCounts<br>StripOffsets<br>XResolution<br>YResolution |
| RGB images | BitsPerSample (8,8,8 or 16,16,16; or if SamplesPerPixel = 4: 8,8,8,8 or 16,16,16,16)<br>Compression (1, 5, 7, or 32773)<br>ExtraSamples (0, 1, or 2. Required if SamplesPerPixel = 4; may not be present otherwise)<br>ICC Color Profile [tag 34675]<br>ImageLength<br>ImageWidth<br>PhotometricInterpretation (2) |

(continued)

| Image type | Tags |
|---|---|
| | PlanarConfiguration (1)<br>ResolutionUnit (1, 2, or 3)<br>RowsPerStrip<br>SamplesPerPixel (3 or 4)<br>StripByteCounts<br>StripOffsets<br>XResolution<br>YResolution |
| CMYK images (TIFF extension) | BitsPerSample (8,8,8,8 or 16,16,16,16; *or* if SamplesPerPixel = 5: 8,8,8,8,8 or 16,16,16,16,16)<br>Compression (1, 5, 7, or 32773)<br>ExtraSamples (0, 1, or 2. Required if SamplesPerPixel = 5; may not be present otherwise)<br>ICC Color Profile [tag 34675]<br>ImageLength<br>ImageWidth<br>InkSet (1)<br>NumberOfInks (4)<br>PhotometricInterpretation (5)<br>PlanarConfiguration (1)<br>ResolutionUnit (1, 2, or 3)<br>RowsPerStrip<br>SamplesPerPixel (4 or 5)<br>StripByteCounts<br>StripOffsets<br>XResolution<br>YResolution |

If the TIFF image contains multiple image file directories (IFDs), consumers MAY use only the first IFD and ignore all others.

**Note:** If the ResolutionUnit tag is set to 1 (no units), XResolution and YResolution are interpreted in the same manner as if the ResolutionUnit was set to 2 (inches).

If no color profile is embedded in the TIFF image, then the default color space MAY be treated as described in section 5.2.1, "Rich Color Support".

The following features of the TIFF specification MAY be supported in addition to the tags described in Table 2-5:

- Baseline TIFF (Sections 1-10) with the exception of the following tags:

    - Cell Length
    - CellWidth
    - GrayResponseCurve
    - GrayResponseUnit
    - MaxSampleValue
    - MinSampleValue
    - Orientation
    - Thresholding

- CCITT bilevel encodings (Section 11)
- CMYK images (Section 16)
- Associated alpha data (Section 18)

◦ ExtraSamples tag value of 0: The data in this channel MAY be ignored

◦ ExtraSamples tag value of 1: The alpha MAY be treated as pre-multiplied alpha

◦ ExtraSamples tag value of 2: The alpha MAY be treated as non-pre-multiplied alpha

- LZW compression (Section 13)
- Differencing predictors (Section 14)
- JPEG compression (ITU-T T.81, ISO/IEC 10918-1)

    ◦ Only compression mode 7 MAY be supported

- Embedded ICC Profile (described in the ICC specification)
- EXIF IFD (tag 34665) as described in the EXIF specification. The EXIF color space MAY be interpreted correctly.

Consumers that support tags and features not described above can result in undesirable differences in the appearance of 3MF Documents. Producers cannot rely on a consistent interpretation of tags or features that are not described above and therefore SHOULD NOT use any such tags or features.

3MF Document consumers SHOULD mitigate the effect of badly formed TIFF files in the following ways:

- Accommodate common mistakes in TIFF images, such as:

    ◦ Not all BitsPerSample hold the same value

    ◦ Number of BitsPerSample does not match SamplesPerPixel

    ◦ PhotometricInterpretation 1 or 2 (instead of 3) used when BitsPerSample is set to "8,8,8"

    ◦ When the ExtraSamples tag is missing and SamplesPerPixel is not consistent with the PhotometricInterpretation tag then ExtraSamples values should be given the value 0.

- Implement a recovery strategy when a problematic TIFF image is encountered.

**Note:** Over time, TIFF-consuming implementations have developed a certain tolerance for such deviations by attempting to deduce the intent of the TIFF image author and correct for apparent errors or deviations. Many TIFF images in circulation today deviate from the TIFF Specification.

### 2.1.3.4. TBMP Images

Texture Bitmap (TBMP) images are two- or three-dimensional images defined in this specification. TBMP images MAY be UTF-8 encoded XML 1.0 files containing a single root element, <texture>, with the attributes width, height, and depth that specify values in bytes, which correspond to voxel units. The width, height, and depth attribute values MAY be present and MAY be greater than 0.

The content of the <texture> element are the <r>, <g>, <b>, and <a> elements representing the red, green, blue, and alpha channels (if present). The content of each of these elements represents a series of hexadecimal bytes ranging from 00 (fully unsaturated) to FF (fully saturated). Each byte represents one voxel. The bytes are ordered from the top, back, left corner of the image. All of the top XY plane of voxels is provided first, then the next lower plane of XY voxels, and so on. Within a given plane, bytes are ordered row-by-row from the back to the front.

Producers MAY put whitespace between bytes and consumers MAY ignore whitespace between bytes. The producer SHOULD ensure the number of bytes provided is equal to the product of the width, height, and depth attributes, but MAY omit trailing bytes that are uniformly equal to 00 for the red, green, or blue channels, or uniformly equal to FF for the alpha channel. If the consumer encounters fewer bytes than this product, it MAY treat the missing bytes as having a value of 00 for the red, green, and blue channels, or FF for the alpha channel. If the consumer encounters bytes in excess of this product, it MAY ignore them.

*Example 2-1: Texture Bitmap*

```
<?xml version="1.0" encoding="UTF-8" standalone="no" ?>
<texture width="9" height="9" depth="2">
   <r>
    00 00 00 00 00 00 00 00 00
```

```
00 00 FF FF FF FF FF 00 00
00 FF FF 00 FF 00 FF FF 00
00 FF FF 00 FF 00 FF FF 00
00 FF FF FF FF FF FF FF 00
00 FF 00 FF FF FF 00 FF 00
00 FF FF 00 00 00 FF FF 00
00 00 FF FF FF FF FF 00 00
00 00 00 00 00 00 00 00 00
00 00 00 00 00 00 00 00 00
00 00 FF FF FF FF FF FF 00
00 FF FF 00 FF 00 FF FF 00
00 FF FF 00 FF 00 FF FF 00
00 FF FF FF FF FF FF FF 00
00 FF FF 00 00 00 FF FF 00
00 FF 00 FF FF FF 00 FF 00
00 00 FF FF FF FF FF 00 00
00 00 00 00 00 00 00 00 00
</r>
<g>
00 00 00 00 00 00 00 00 00
00 00 FF FF FF FF FF 00 00
00 FF FF 00 FF 00 FF FF 00
00 FF FF 00 FF 00 FF FF 00
00 FF FF FF FF FF FF FF 00
00 FF 00 FF FF FF 00 FF 00
00 FF FF 00 00 00 FF FF 00
00 00 FF FF FF FF FF 00 00
00 00 00 00 00 00 00 00 00
00 00 00 00 00 00 00 00 00
00 00 FF FF FF FF FF FF 00
00 FF FF 00 FF 00 FF FF 00
00 FF FF 00 FF 00 FF FF 00
00 FF FF FF FF FF FF FF 00
00 FF FF 00 00 00 FF FF 00
00 FF 00 FF FF FF 00 FF 00
00 00 FF FF FF FF FF 00 00
00 00 00 00 00 00 00 00 00
</g>
</texture>
```

*Figure 2–2. Example TBMP pixels*
The image above produces the following pixels (black pixels are shown in dark gray for clarity). Note that the blue channel is set to 00 for every pixel and the alpha channel is set to FF for every pixel.

Top layer  Bottom Layer

**2.1.4. Thumbnail Part**

Thumbnails are small images that represent the contents of an entire 3MF Document. Thumbnails enable external agents to view the contents of the 3MF Document easily.

Although the Open Packaging Conventions specification allows thumbnails to be attached to any part, 3MF Document consumers SHOULD only process thumbnails associated via a package relationship from the package as a whole. These thumbnail parts MAY be in either JPEG or PNG format. Thumbnails attached to any other part SHOULD be ignored by 3MF Document consumers. The content types of thumbnail parts are specified in section C.2, "Content Types."

For more information about the relationship type for thumbnail parts, see section C.3, "Relationship Types."

### 2.1.5.PrintTicket Part

PrintTicket parts provide user intent and device configuration information to printing consumers. PrintTicket parts MAY be processed when the 3MF Document is printed. A PrintTicket part can be attached only to a 3D Model part and each 3D Model part MAY attach no more than one PrintTicket.

### 2.1.5.1. PrintTicket Format

The PrintTicket is XML that provides print settings in a consistent, accessible, and extensible manner. Valid PrintTicket settings are specified in the Print Schema Keywords for 3D Manufacturing specification. Within the context of a 3MF Document, the PrintTicket is generated by the producer. Producers should note that a 3MF Document may be printed on various devices, and that the settings included in the PrintTicket SHOULD support portability.

3D manufacturing devices MAY process the PrintTicket part within the 3D payload.

### 2.2. Part Naming Recommendations

Producers and consumers of 3MF Documents refer to parts by name and use relationship names to identify the purpose of related parts. The Open Packaging Conventions specification describes the syntax for part name. However, following these rules alone can result in a package that is difficult for users to understand. For example, a user would have to open every Relationship part to know which parts are necessary to accurately manufacture a 3MF Document.

By choosing part names according to a well-defined, human-readable convention, the resulting package is easier to browse and specific parts are more easily located. Part names MAY still conform to the syntax specified in the Open Packaging Conventions specification.

It is RECOMMENDED that producers of 3MF Documents use the following part naming convention:

- The 3D Model part name SHOULD contain two segments, the first being "/3D/" and the second with the extension ".model" on the last segment, for example "/3D/3dModel.model".
- 3D Texture part names SHOULD contain three segments, using "/3D/Textures/" as the first two segments and the extension ".texture" on the last segment, for example "/3D/Textures/coloring.texture". 3D Texture parts should be associated with the 3D Model part via relationship.

- The PrintTicket part name SHOULD be associated via relationship with the 3D Model part and contains three segments, using "/3D/Metadata/" as the first two segments with the extension ".xml". For example, "/3D/Metadata/Model_PT.xml".
- The names of any non-standard parts that are associated with the 3D payload SHOULD contain 3 segments, using "/3D/Other/" as the first two segments.

### 2.3. 3MF Document Markup

3MF Document markup has been designed to facilitate independent development of compatible systems that produce or consume 3MF Documents.

The design of 3MF Document markup reflects the tradeoffs between two, sometimes competing, goals:

1. 3MF Document markup should be parsimonious; that is, it should include only the minimum set of primitive operations and markup constructs necessary to manufacture 3D objects with full fidelity. Redundancy in the specification increases the opportunity for independent implementations to introduce accidental incompatibilities. Redundancy also increases the cost of implementation and testing, and, typically, the required memory component.

2. 3MF Document markup should be compact; that is, the most common primitives should have compact representations. Bloated representations compromise the performance of systems handling 3MF Documents. As byte-count increases, so does communication time. Although compression can be used to improve communication time, it cannot eliminate the performance loss caused by bloated representations.

### 2.3.1.Support for Versioning and Extensibility

3MF Document markup has been designed in anticipation of the evolution of this specification. It also allows third parties to extend the markup. 3MF Document markup incorporates the Markup Compatibility specification incorporated by the Open Packaging Conventions specification.

The following parts MAY include elements and attributes defined in the Markup Compatibility specification:

- 3D Model
- Relationships

Consumers of these parts MAY support the Markup Compatibility specification. Before attempting to validate one of these parts against a schema, processors MAY remove all markup compatibility elements and attributes and all ignorable elements and attributes not defined in the expected version of 3MF Document markup.

### 2.3.2.XML Usage

All XML content of the parts defined in this specification MAY conform to the following validation rules:

1. XML content MAY be encoded using either UTF-8 or UTF-16. If any such part includes an encoding declaration (as defined in Section 4.3.3 of the XML specification), that declaration MAY NOT name any encoding other than UTF-8 or UTF-16.

2. The XML 1.0 specification allows for the usage of Data Type Definitions (DTDs), which enabled denial of service attacks, typically through the use of an internal entity expansion technique. As mitigation for this potential threat, DTD content MAY NOT be used in the XML markup defined in this specification, and consumers MAY treat the presence of DTD content as an error.

3. If the XML content contains the Markup Compatibility namespace, as described in the Markup Compatibility specification, it MAY be processed to remove Markup Compatibility elements and attributes, ignorable namespace declarations, and ignored elements and attributes before applying further validation rules below.

4. XML content MAY be valid against the corresponding XSD schema defined in this specification. In particular, the XML content MAY NOT contain elements or attributes drawn from namespaces that are not explicitly defined in the corresponding XSD unless the XSD allows elements or attributes drawn from any namespace to be present in particular locations in the XML markup.

5. XML content MAY NOT contain elements or attributes drawn from the "xml" or "xsi" namespaces unless they are explicitly defined in the XSD schema or by other means in the specification.

### 2.3.3.Markup Model

3MF Document markup is an XML-based markup language that uses elements, attributes, and namespaces. The schema for 3MF Document markup includes only elements and their attributes, comments, and whitespace. Arbitrary character data intermingled in the markup is allowed only at designated metadata extensibility points.

### 2.3.3.1. XML Namespaces

The following XML namespaces are defined for use in 3MF Document markup:

- The 3MF Document namespace, the principal namespace used for elements and attributes in 3D Model part markup. For more information, see Appendix C, "Standard Namespaces and Content Types".
- The Markup Compatibility namespace, which supports the Markup Compatibility specification as defined in the Open Packaging Conventions specification.

### 2.3.4. Whitespace

3MF Documents allow flexible whitespace usage in markup. Wherever a single whitespace character is allowed, multiple whitespace characters MAY be used. Attributes that specify comma-delimited attribute values MAY, unless otherwise specified, OPTIONALLY include whitespace characters preceding or following the comma. 3MF Document markup MAY NOT use the **xml:space** attribute. Additionally, where the 3MF Document schema specifies attributes of types that allow whitespace collapsing, leading and trailing whitespace in the attribute value MAY be used along with other whitespace that relies on the whitespace collapsing behavior specified in the XML Schema Specification.

**Note:** Consult the 3MF Schema for exact whitespace allowed.

**2.3.5.Language**

The language of the contents of a 3MF Document (typically useful for content provided in metadata) MAY be identified using the **xml:lang** attribute, the value of which is inherited by child and descendant elements. This attribute is defined in the W3C XML specification. When the language of the contents is unknown, the value "und" (undetermined) MAY be used.

**Chapter 3: 3D Models**

The model, in this specification, refers to the object or objects to be created via 3D manufacturing processes as a single operation. It might include a single object, multiple homogenous objects, multiple heterogeneous objects, an object fully enclosed in another object, or multiple objects in an interlocked and inseparable assembly.

**3.1. Coordinate Space**

Coordinates in this specification are based on a right-handed coordinate space, with the model coordinates appearing in the positive XYZ octant, after any transform is applied. Producers and consumers MAY define and map the origin of the coordinate space to the bottom-left corner of the device's output field (such as a tray, platform, or bed), with the x-axis increasing to the right of the output field, the y-axis increasing to the back of the output field, and the z-axis increasing to the top of the output field. Producers and consumers MAY use the unit resolution of the coordinate space as specified in the <model> element.

*Figure 3-1. Coordinate space*

**3.2. Relative Directions and Measurement**

Relative directions in this specification are defined as follows. The term top refers to the XY plane of the coordinate space with the maximum printable Z value. The term bottom refers to the minimum printable XY plane of the coordinate space, defined as the XY plane with a Z value of 0. This is typically coincident with the print bed surface. The term left refers to the minimum printable YZ plane of the coordinate space, defined as the YZ plane with an X value of 0. The term right refers to the YZ plane of the coordinate space with the maximum printable X value. The term front refers to the minimum printable XZ plane of the coordinate space, defined as the XZ plane with a Y value of 0. The term back refers to the XZ plane of the coordinate space with the maximum printable Y value.

These terms might also be applied to models, in which case they are defined relative to the bounding box of the model when transformed to the coordinate space defined in this specification.

Producers and consumers MAY interpret relative coordinates in relation to the coordinate space defined in this specification.

**3.3. Matrices**

When objects need to be transformed for rotation, scaling, or translation purposes, row-major affine 3D matrices (4x4) are used. A producer MAY NOT generate a matrix to achieve a transform effect other than rotation, scaling, or translation. The determinant of a matrix MAY NOT be 0. Note that if the determinant is less than 0, the normal of a triangle may be inverted.

Transforms are of the form, where only the first 3 column values are specified. The last column is never provided, and has the fixed values 0.0, 0.0, 0.0, 1.0. When specified as an attribute value, matrices have the form "m00 m01 m02 m10 m11 m12 m20 m21 m22 m30 m31 m32" where each value is a decimal number.

$$\begin{bmatrix} m00 & m01 & m02 & \mathbf{0.0} \\ m10 & m11 & m12 & \mathbf{0.0} \\ m20 & m21 & m22 & \mathbf{0.0} \\ m30 & m31 & m32 & \mathbf{1.0} \end{bmatrix}$$

After applying any transform to an object, the matrix MAY have volume and MAY be located in the positive octant of the coordinate space.

### 3.3.1.2D Matrices

Sliced objects define their shapes with geometries comprised of multiple figures (see §4.3, "Slices" for more information). To enable a more compact format, the producer MAY define a geometry template that is referenced by multiple geometries, which MAY also apply an affine 2D matrix transform (3x3) to the geometry template values. This matrix MAY be used for scaling, rotation, and translation within the plane of the geometry's slice; the producer MAY NOT use a matrix to achieve any other form of transformation. The determinant of a matrix MAY NOT be 0. These transforms specify the first 2 columns' values. They are specified with the values "m00 m01 m10 m11 m20 m21". The last column of this row-major matrix has the implicit values 0.0, 0.0, and 1.0.

$$\begin{bmatrix} m00 & m01 & \mathbf{0.0} \\ m10 & m11 & \mathbf{0.0} \\ m20 & m21 & \mathbf{1.0} \end{bmatrix}$$

### 3.4. Model

Element **\<model\>**

| diagram | | | | |
|---|---|---|---|---|
| attributes | Name | Type | Default | Annotation |
| | unit | **ST_Unit** | millimeter | Specifies the unit used to interpret all vertices, locations, or measurements in the model. Valid values are micron, millimeter, centimeter, inch, foot, and meter. |

(continued)

| attributes | Name | Type | Default | Annotation |
|---|---|---|---|---|
| | xml:lang | | | Specifies the default language used for the current element and any descendant elements. The language is specified according to RFC 3066. |

The <model> element is the root element of the 3D Model part. There MAY be exactly one <model> element in a 3D Model part. A model has two child elements: <resources> and <build>. The <resources> element provides a set of definitions that can be drawn from to define a 3D object. The <build> element provides a set of items that should actually be manufactured as part of the job.

### 3.5. Resources

Element **<resources>**

(continued)

| attributes | Name | Type | Annotation |
|---|---|---|---|
| | protectiontype | **xs:QName** | Specifies the type of protection that has been applied to all the contents of the resources element. The protectiontype should be a qualified name defined by the protector of the content and identified by an XML namespace on the model element. Necessary supplemental data such as licenses and protection authority URL SHOULD be defined as metadata for this element, in the same namespace as the protectiontype. A producer MAY NOT include a <protectedresource> child element if the protectiontype attribute is not specified. See Chapter 8, "Protected Content" for more information. |

The <resources> element acts as the root element of a library of constituent pieces of the overall 3D object definition. Textures, colors, materials, actions, and objects are collectively referred to as resources in this specification.

Each resource might rely on other resources for its complete definition. For example, a color resource might specify a color that is applied to a mesh but includes a range of actual colors defined, pixel-by-pixel, in a texture resource. A material resource might refer to a color resource as part of its definition. An object resource may refer to color resources, material resources, action resources, or even other object resources to fully describe a 3D object.

An object resource represents a single 3D object that *could* be manufactured, but not necessarily *will* be manufactured. The objects that actually *will* be manufactured are referenced from an <item> element child of the <build> element. Objects are defined as resources primarily to aid in modularizing design and re-use of component, thus compacting the overall markup size.

### 3.5.1. Protected Resources

#### Element **protectedresources**

The <protectedresources> element MAY contain mixed content and is described in Chapter 8, "Protected Resources."

### 3.6. Build Instructions

#### Element **<build>**

The <build> element contains one or more items to manufacture as part of processing the job. A consumer MAY NOT output any 3D objects not referenced by an <item> element.

### 3.6.1.Item Element

Element **<item>**

| diagram | | | | |
|---|---|---|---|---|
| attributes | Name | Type | Use | Annotation |
| | objectid | **xs:nonNegativeInteger** | required | Reference to the <object> element with the matching id attribute value |
| | transform | **ST_Matrix** | | A matrix transform (see §3.3, "Matrices") used to apply rotation, scale, and translation to the item to be outputted. |

The <item> element identifies one object resource to be output by the 3D manufacturing device. A consumer MAY apply the transform prior to outputting the object. The producer MAY NOT apply a transform that would make any position value (x, y, or z) negative or make the object have no volume. The producer MAY NOT specify a transform that would rotate the XY plane of an object that is defined by slices rather than a mesh or includes any component defined by slices rather than a mesh.

A 3MF Document may include multiple objects to manufacture at the same time. Sometimes these objects are arranged in the coordinate space so as to be manufactured in an interlocking fashion, while other times they are manufactured separately and require post-processing assembly. Both possibilities are enabled through the use of the transforms on each item. See §3.3, "Matrices."

### Chapter 4: Object Resources

Object resources describe reusable objects that may be output (by reference) or composed into more complex objects or assemblies.

### 4.1. Objects

Element **<object>**

| diagram | |
|---|---|

| attributes | Name | Type | Use | Def. | Annotation |
|---|---|---|---|---|---|
| | id | **xs:ID** | req'd | | Defines the unique identifier for this object. |
| | colorid | **xs:nonNe gativeInte ger** | | | Reference to the <color> element with the matching id attribute value. A consumer that does not support multiple colors MAY ignore the color information. If omitted, the color MAY be considered to be #FFFFFF. The alpha channel MAY always be considered to be FF for an object for purposes of alpha blending of triangle colors with transparency. |
| | fillmateriali d | **xs:nonNe gativeInte ger** | | | Reference to the <material> element with the matching id attribute value. It is used to fill the object according to the filltextureid attribute value. If omitted, the material identified by the materialid attribute is used to fill the object. |

(continued)

| attributes | Name | Type | Use | Def. | Annotation |
|---|---|---|---|---|---|
| | materialid | **xs:nonNe gativeInteger** | | | Reference to the \<material\> element with the matching id attribute value. It is used to build the perimeter, or walls, of the object If it is omitted, the fill is determined by the settings in the Model PrintTicket. If a value is not specified there, the consumer MAY provide its own suitable default. |
| | minwallthi ckness | **ST_GTZe ro** | | | Specifies the minimum thickness of the perimeter, or walls, of the object. Consumers SHOULD enforce this value. |
| | filltexturei d | **xs:nonNe gativeInte ger** | | | Specifies a texture to fill the object with. Consumers MAY ignore this value. If this attribute is omitted, the fill is determined by settings in the Model PrintTicket. If a value is not specified there, the consumer MAY provide its own suitable default value. If the referenced texture specifies a tilestyleu, tilestylev, or tilestylew value of none, the consumer MAY treat it as a value of repeat instead. |
| | constraint | **ST_Objec tConstrai nt** | | outer | Specifies how the consumer SHOULD relate physical material deposition or removal with respect to the provided object definition. That is, whether material is not allowed to exceed the volume defined (outer), whether it may always equal or exceed the volume defined (inner), or whether the material should be centered on the line defining the perimeter of the defined volume (center). This value is useful for defining objects that are intended to interlock into an assembly. |
| | type | **ST_Objec tType** | | | Specifies the function of the object in the model. Valid values are model, support, or slices. A consumer MAY ignore support objects if they are not needed. The consumer MAY generate its own support objects in place of the provided support objects, but this is NOT RECOMMENDED. |

An object resource is defined by an \<object\> element. An \<object\> element has attributes for colors and materials that are to be applied to the entire object, except where overridden by a \<mesh\> or \<triangle\> descendant element.

**4.2. Meshes**

Element **<mesh>**

The <mesh> element is the root of a triangular mesh representation of an object volume. It contains a set of vertices, a set of triangles, and optionally a set of components (see §4.2.3, "Components").

The mesh MAY be watertight, meaning every triangle edge in the mesh shares common vertex endpoints with exactly 1 edge of another triangle, creating a continuous surface without holes, gaps, open edges, or disconnected enclosed volumes. Furthermore, every pair of adjacent triangles within the mesh MAY have the same orientation of the face normal toward the exterior of the mesh, meaning that the order of declaration of the vertices on the shared edge MAY be in the opposite order. For example, if Triangle1 has vertices ABC and Triangle2 has vertices DEF and Triangle1 and Triangle2 share the AB/DE edge, then it MAY be the case that vertices A=E and vertices B=D (see figure 4-1 below). The mesh MAY NOT have any self-intersections.

*Figure 4-1. Consistent triangle orientation*

**4.2.1. Vertices**

Element **<vertices>**

The vertices element contains all the <vertex> elements for this object. The vertices represent the corners of each triangle in the mesh. The order of these elements defines an implicit 0-based index that is referenced by other elements, such as the <triangle> element. The producer SHOULD NOT include duplicative vertices. Furthermore, a producer SHOULD collapse vertices that are very closely proximal with a single vertex whenever appropriate.

The vertex children SHOULD be sorted from lowest z value to highest z-value.

### 4.2.1.1. Vertex

Element **<vertex>**

| diagram | | | | | |
|---|---|---|---|---|---|
| | CT_Vertex attributes: x, y, z, metadata 0..∞ | | | | |
| attributes | Name | Type | Use | Annotation | |
| | x | **ST-Double** | required | The position of the vertex along the X axis. | |
| | y | **ST-Double** | required | The position of the vertex along the Y axis. | |
| | z | **ST-Double** | required | The position of the vertex along the Z axis. | |

A <vertex> element represents a point in 3-dimensional space that is referenced by a triangle in the mesh. Producers SHOULD NOT include vertices that are not referenced by at least 2 triangles in the mesh.

### 4.2.2.Triangles

Element **<triangles>**

| diagram | |
|---|---|
| | CT_Triangles triangletemplate 0..∞ triangles triangle 4..∞ |

The <triangles> element contains a set of 4 or more <triangle> elements to describe a full 3D object mesh.
The triangle children SHOULD be sorted from lowest value to highest value, where the value is the lowest z value of the vertices v1, v2, or v3.
The triangle template children provide an easy mechanism to set some common properties in a single location, to facilitate more abbreviated markup.

### 4.2.2.1. Triangle

Element **<triangle>**

| diagram | |
|---|---|
| | |

| attributes | Name | Type | Use | Annotation |
|---|---|---|---|---|
| | v1 | **xs:nonNegativeInteger** | required | References a zero-based index into the vertices for this mesh. Defines the first vertex of the triangle. |
| | v2 | **xs:nonNegativeInteger** | required | References a zero-based index into the vertices for this mesh. Defines the second vertex of the triangle. |
| | v3 | **xs:nonNegativeInteger** | required | References a zero-based index into the vertices for this mesh. Defines the third vertex of the triangle. |
| | templateid | **xs:nonNegativeInteger** | | The templateid value MAY reference a triangle template defined in the current mesh. The template provides default values for the colorid, cv1, cv2, cv3, and constraint values for this element, if they are not provided explicitly. |
| | colorid | **xs:nonNegativeInteger** | | References a color resource with a matching id attribute value. A consumer that does not support multiple colors MAY ignore the color information. If omitted, the color MAY be inherited from the triangle template, if specified; otherwise, the color MAY be inherited from the object. |

(continued)

| attributes | Name | Type | Use | Annotation |
|---|---|---|---|---|
| | cv1 | **ST_Vector** | | Provides the location within the referenced color resource that should be mapped to the vertex v1. May be of the form "u,v,w" or "u,v". If omitted, it MAY be inherited from the triangle template, if specified. |
| | cv2 | **ST_Vector** | | Provides the location within the referenced color resource that should be mapped to the vertex v2. May be of the form "u,v,w" or "u,v". If omitted, it MAY be inherited from the triangle template, if specified. |
| | cv3 | **ST_Vector** | | Provides the location within the referenced color resource that should be mapped to the vertex v3. May be of the form "u,v,w" or "u,v". If omitted, it MAY be inherited from the triangle template, if specified. |
| | constraint | **ST_ObjectConstraint** | | Specifies how the consumer SHOULD relate physical material deposition or removal with respect to this face. That is, whether material is not allowed to exceed the volume defined (outer), whether it may always equal or exceed the volume defined (inner), or whether the material should be centered on the line defining the perimeter of the defined volume (center). This value is useful for defining objects that are intended to interlock into an assembly. If omitted, it MAY be inherited from the triangle template, if specified; otherwise, this value overrides the constraint defined on the <object> element when specified. |

A <triangle> element represents a single face of the mesh. The order of the vertices (v1, v2, v3) MAY be specified in counter-clockwise order, such that the face normal of the triangle is pointing toward the outside of the object.

Normals are implicit in a 3MF document and SHOULD be calculated when needed. A producer MAY store normal data in a <metadata> element in order to avoid recalculation.

Colors can reference a texture resource. The specific coordinates within the texture that map to v1, v2, and v3 are cv1, cv2, and cv3 respectively. Coordinates in the cv1, cv2, and cv3 attributes are specified in the coordinate space and units of the texture resource. The relative position of the texture coordinates MAY be linearly scalable to directly map to the vertices. It is therefore possible to map a portion of a texture image to the triangle face, granting the producer substantial control over color application to the mesh.

### 4.2.2.2. Triangle Templates

### Element **<triangletemplate>**

| diagram | |
|---|---|

| attributes | Name | Type | Use | Annotation |
|---|---|---|---|---|
| | id | **xs:ID** | required | A unique identifier for this triangle template. |
| | colorid | **xs:nonNegativeInteger** | | See colorid attribute of the triangle element above. |
| | cv1 | **ST_Vector** | | See cv1 attribute of the triangle element above. |
| | cv2 | **ST_Vector** | | See cv2 attribute of the triangle element above. |
| | cv3 | **ST_Vector** | | See cv3 attribute of the triangle element above. |
| | constraint | **ST_ObjectConstraint** | | See constraint attribute of the triangle element above. |

The <triangletemplate element simply provides a mechanism to define many invariant triangle attributes once and refer to them from multiple triangles.

### 4.2.3. Components

### Element **<components>**

| diagram | |
|---|---|

The <components> element acts as a container for all components to be added to the current object. A component is an object resource that is used in the context of another object definition. Through the use of components, a

28

producer can reduce the size of the overall size of the 3MF Document. For example, if the 3MF Document describes a car 3D object, there may be a car object resource that uses 4 components, or instances of a tire object resources, to place the wheels on the car after applying the necessary rotation and translation (via transform).

**4.2.3.1. Component**

Element **<component>**

| diagram | |
|---|---|

| attributes | Name | Type | Use | Annotation |
|---|---|---|---|---|
| | objectid | **xs:nonNegativeInteger** | required | References an object resource with a matching id attribute value. |
| | transform | **ST_Matrix** | "Matrices") | A matrix transform (see §3.3, "Matrices") used to apply rotation, scale, and translation to the item to be outputted. |

A component selects a pre-defined object resource and adds it to the current object definition, after applying the provided matrix transform. This composition of an object definition from multiple primitive components can provide a very compact file size for a quite complex model. The producer MAY NOT specify a transform that would cause any portion of the object to extend outside the positive octant or have no volume. The producer MAY NOT specify a transform that would change the XY plane of an object that is defined by slices rather than a mesh.

**4.3. Slices**

Element **<slices>**

| diagram | | | | |
|---|---|---|---|---|
| attributes | Name | Type | Use | Annotation |
| | sliceheight | **ST_Double** | required | Specifies the slice height of all child geometries. |

Instead of defining a triangular mesh, a producer may instead provide a set of XY planar layers of a fixed height, which, when stacked one atop the other, encompass the entire physical shape of the 3D object. Each of these layers is referred to as a slice. Each slice may contain multiple enclosed vector regions, each of which is referred to as a geometry. For example, a slice through the legs of a table would generate four geometries-one circle or square for each leg of the table.

Slices may commonly be provided by producers that target subtractive process 3D manufacturing devices, such as laser or water jet cutters.

The <slices> element contains a collection of all the geometries that make up the slices of the object to be manufactured. Each geometry identifies the slice it belongs to by zero-based index, starting at the bottom of the object and increasing by one for each subsequent slice.

Sometimes the actual data description of the geometry may be repeated among many individual geometry elements, e.g. the legs of a table might all be the same, just rotated for each leg. To make slice markup more compact, the consumer MAY define one or more geometry templates and simply refer to the templates within the data attribute value.

### 4.3.1.Geometry Template

Element **<geometrytemplate>**

| diagram | | | | |
|---|---|---|---|---|
| attributes | Name | Type | Use | Annotation |
| | id | **xs:ID** | required | A globally unique identifier for this geometry template. |
| | data | **ST_AbbrGeom** | required | Defines the shape of the geometry through use of abbreviated geometry syntax. The actual values can be modified by the referencing <geometry> with a 2D matrix transform. |

The geometry template causes no output on its own. It merely provides a geometry definition that can be referenced by actual geometry elements.

**4.3.2.Geometry**

Element **<geometry>**

| diagram | |
|---|---|

| attributes | Name | Type | Use | Def. | Annotation |
|---|---|---|---|---|---|
| | data | **ST_AbbrGeomRef** | req'd | | Defines the shape of the geometry through use of abbreviated geometry syntax. Alternately, can contain a reference and optional transform to apply to a previously-defined <geometrytemplate> element's data attribute value. This form is "geom(geomid)" or "geom(geomid m00 m01 m10 m11 m20 m21)" where geomid refers to the matching id attribute value of a <geometrytemplate> element previously defined and m00-m21 refer to the values of a 2D transform matrix (see §3.3.1, "2D Matrices"). A geometry MAY NOT reference a geometry template defined by another object. |
| | slice | **xs:nonNegativeInteger** | req'd | | The index of the slice this geometry belongs to. |
| | objectid | **xs:nonnegat** | | | Represents the abstract object instance |

31

EP 3 013 563 B1

(continued)

| attributes | Name | Type | Use | Def. | Annotation |
|---|---|---|---|---|---|
| | | iveInteger | | | that this object is part of. Allows the consumer to potentially identify a single object to cancel without canceling an entire job. |
| | objectty pe | ST_Geometr yType | | model | Specifies whether the geometry is a support or a model geometry. |
| | colorid | xs:nonNegat iveInteger | | | Specifies the default color to apply to the whole geometry. A consumer MAY ignore this attribute if it does not support color output. If omitted, the color is assumed to be that of the object as a whole. If the color includes transparency, the color is blended with that of the object. |
| | cv1 | ST_Vector | | | If colorid refers to a color resource defined by a texture, this attribute specifies the u,v or u,v,w within that texture that corresponds to the first Move command point in the data attribute value. |
| | cv2 | ST_Vector | | | If colorid refers to a color resource defined by a texture, this attribute specifies the u,v or u,v,w within that texture that corresponds to the second segment's endpoint in the data attribute value. |
| | cv3 | ST_Vector | | | If colorid refers to a color resource defined by a texture, this attribute specifies the u,v or u,v,w within that texture that corresponds to the third segment's endpoint in the data attribute value. |
| | material id | xs:nonNegat iveInteger | | | Specifies the material to be used for this geometry. |
| | constrai nt | ST_ObjectC onstraint | | | Specifies how the consumer SHOULD relate physical material deposition or removal with respect to this geometry. That is, whether material is not allowed to exceed the volume defined (outer), whether it may always equal or exceed the volume defined (inner), or whether the material should be centered on the line defining the perimeter of the defined volume (center). This value is useful for defining objects that are intended to interlock into an assembly. This value overrides the constraint defined on the <object> element when specified. In the case of an un-closed geometry, the value outer is intended to preserve the left side of |

32

(continued)

| attributes | Name | Type | Use | Def. | Annotation |
|---|---|---|---|---|---|
| | | | | | the lines or curves when following the direction of travel in the geometry definition, while outer is intended to preserve the right side of the lines or curves. |
| | depth | **ST_ZeroToOne** | | 0.0 | Used by geometries that are intended to be engravings that descend only partially through the slice, e.g. laser cuts. The value describes how far from the top of the slice the geometry begins. A value of 0.0 is no engraving and a value of 1.0 is entirely cut through the slice. Subtractive devices MAY treat a value of 1.0 as slightly greater than 1.0 to ensure a clean cut all the way through the material. |

Each geometry describes a region that defines one portion of a slice. It MAY define an engraving overlaid on another geometry, but consumers MAY ignore any geometry with a depth value other than 0.0. The geometry SHOULD be closed unless the geometry is a cut or engraving (when targeting a subtractive 3D manufacturing device) or is a support structure, specified by the objecttype parameter.

Each geometry is made of one or more figures. A figure is a set of connected segments. A segment is a single line or curve. A consumer MAY approximate a curve with a series of straight lines, if it is incapable of creating a true curve.

The default color of the geometry is defined the color resource referenced by the colorid attribute. If the color resource refers to a texture, the cv1/cv2/cv3 attribute values are mapped to the first three move point or segment endpoints defined in the data attribute. These 3 points define a plane through the geometry and implicitly define the orientation and scaling of the texture as it is mapped to the geometry. These values MAY be proportional to the endpoints they correspond to such that uniform scaling is applied. All other geometry-correspondence points within the texture MAY be extrapolated from the first three points. Areas of the texture that fall outside of the geometry, per the fill rule, MAY be excluded. The color of the perimeter of the geometry MAY be overridden by PickColor commands within the abbreviated geometry in the data attribute value. The thickness of the perimeter color is implementation-defined, but SHOULD be the minimum thickness necessary to show the desired color on the surface of the object.

Note that producers targeting stereolithography 3D manufacturing devices (that process bitmaps) MAY set a texture to fill each geometry, but SHOULD still provide geometry outlines of the imageable elements of that texture to maintain portability to other, non-stereolithography devices.

Producers SHOULD sort geometries in increasing order by the slice attribute.

### 4.3.2.1. Fill Rule

Because a geometry may have overlapping figures or intersecting segments, a *fill rule* may be specified to indicate what enclosed areas are "inside" the geometry and which are "outside" the geometry. The fillable area of a geometry is defined by taking all of the contained figures and applying the fill algorithm to determine the enclosed area. Fill algorithms determine how the intersecting areas of geometric shapes are combined to form a region.

The EvenOdd fill rule determines the "insideness" of a point on the canvas by drawing a ray from the point to infinity in any direction and counting the number of segments from the given shape that the ray crosses. If this number is odd, the point is inside; if it is even, the point is outside. This is the default rule used throughout 3MF Document markup.

*Figure 4–1. Fill using EvenOdd algorithm*

The NonZero fill rule determines the "insideness" of a point on the canvas by drawing a ray from the point to infinity in any direction and then examining the places where a segment of the shape crosses the ray. Starting with a count of zero, add one each time a segment crosses the ray from left to right and subtract one each time a segment crosses the ray from right to left. After counting the crossings, if the result is zero then the point is outside the geometry; otherwise, it is inside.

*Figure 4–2. Fill using NonZero algorithm*

### 4.3.2.2. Abbreviated Geometry Syntax

Each geometry is defined using abbreviated geometry syntax. Abbreviated geometry syntax MAY be used to specify a geometry of one or more figures comprised of multiple segments. A geometry is specified with an optional FillRule command, followed by one or more figure definitions. Figure definitions are specified with a Move command, a set of one or more drawing commands to create segments, optional PickColor commands as needed (as often as one per segment), and an optional Close command to create a closing segment. The behavior of a degenerate geometry with no drawing commands is implementation-defined. Segment drawing commands include:

- Line
- Horizontal Line
- Vertical Line
- Cubic Bezier Curve
- Quadratic Bezier Curve
- Smooth Cubic Bezier Curve
- Elliptical Arc

A command is represented by a single letter and is followed by zero or more whitespace characters, which are followed by command parameters. Parameters are whitespace-delimited. Points are specified as a comma-delimited pair with zero or more whitespace characters.

Uppercase letters denote absolute values and lowercase letters denote relative values. When relative coordinate values are specified, each coordinate pair expresses an offset relative to the current endpoint (the previous command's terminating coordinate pair). If a relative value is used for the first Move command, the current endpoint is, by definition, 0,0.

If a relative value is used following a Close command, the current endpoint is the first point of the previous figure.

If entering more than one drawing command of the same type sequentially, the duplicate command entry MAY be omitted. For example: "L 100,200 300,400" is equivalent to "L 100,200 L 300,400". The current endpoint is determined as though each command appeared individually.

Values specifying coordinates can be real numbers.

*Table 4-1. Commands*

| Name | Syntax | Description |
|---|---|---|
| FillRule | F FillRule | Establishes the fill rule that should be used for this geometry. A value of 0 is equivalent to a FillRule value of EvenOdd; a value of 1 is equivalent to a FillRule value of NonZero. The default value if this command is omitted is 0.<br>This command MAY appear only as the first command in the abbreviated geometry syntax. |
| PickColor | P colorid<br>or<br>P colorid $u_1,v_1$ $u_2,v_2$ | Establishes a new color to use while drawing this geometry. The colorid refers to the color resource to be used. If the color resource is defined by a texture, $u_1,v_1$ and $u_2,v_2$ refer to the start and endpoints within the texture for each subsequent segment of the figure, expressed in the texture's units. If the color resource contains an alpha channel that is not fully opaque, the color is blended with that of the geometry as a whole. |

(continued)

| Name | Syntax | Description |
|---|---|---|
| Move | M x,y or m x,y | Establishes a new current endpoint. Every geometry MAY specify one or more figures, and MAY be preceded by a FillRule command where allowed. The first figure in a geometry MAY begin with a Move command. Subsequent Move commands indicate the start of a new figure but MAY be omitted, indicating the current endpoint for the subsequent figure is the same as the end point of the previous figure. Relative move commands for the first figure of a geometry are interpreted relative to (0,0). |
| Line | L x,y or l x,y | Draws a straight line from the current point to the specified point. |
| Horizontal Line | H x or h x | Draws a horizontal line from the current endpoint to the specified x coordinate. |
| Vertical Line | V y or v y | Draws a vertical line from the current endpoint to the specified y coordinate. |
| Cubic Bézier Curve | C $x_1,y_1$ $x_2,y_2$ $x_3,y_3$ or c $x_1,y_1$ $x_2,y_2,$ $x_3,y_3$ | Draws a cubic Bézier curve from the current endpoint to the specified point ($x_3,y_3$) using the two specified control points ($x_1,y_1$ and $x_2,y_2$). The first control point determines the initial direction (tangent) of the curve, and the second determines the terminating direction (tangent) of the curve. |
| Quadratic Bézier Curve | Q $x_1,y_1$ $x_2,y_2$ or q $x_1,y_1,$ $x_2,y_2$ | Draws a quadratic Bézier curve from the current endpoint to the specified point ($x_2,y_2$) using the specified control point ($x_1,y_1$). |
| Smooth Cubic Bezier Curve | S $x_1,y_1$ $x_2,y_2$ or s $x_1,y_1$ $x_2,y_2$ | Draws a cubic Bézier curve from the current endpoint to the specified point ($x_2,y_2$). The first control point is assumed to be the reflection of the second control point of the previous command, relative to the current endpoint. If there is no previous command or if the previous command was not a Cubic Bézier Curve command or Smooth Cubic Bézier Curve command, the first control point is assumed to be coincident with the current endpoint. The second control point is specified by $x_1,y_1$. |

(continued)

| Name | Syntax | Description |
|---|---|---|
| Elliptical Arc | A $x_r,y_r$ $r_x$ fArc fSweep x,y<br><br>or<br><br>a $x_r,y_r$ $r_x$ fArc fSweep x,y | Draws an elliptical arc from the current endpoint to the specified point (x,y). The size and orientation of the ellipse are defined by<br><br>$x_r,y_r$. $r_x,x_r$ defines the x radius, $y_r$ defines the *y* radius, and $r_x$ defines the x-axis rotation in degrees, which indicates how the ellipse is rotated relative to the current coordinate system. The center of the ellipse is calculated automatically.<br><br>In most situations, four different arcs satisfy the specified constraints. fArc and fSweep indicate which arc to use.<br><br>Of the four candidate arc sweeps, two represent large arcs with sweeps of 180° or greater, and two represent smaller arcs with sweeps less than 180°.<br><br>If fArc is 1, one of the two larger arc sweeps is chosen. If fArc is 0, one of the smaller arc sweeps is chosen. No other values of fArc are valid.<br><br>If fSweep is 1, the arc is drawn in a positive-angle (clockwise) direction. If fSweep is 0, the arc is drawn in a negative-angle (counter-clockwise) direction. No other values of fSweep are valid. |
| Close | Z or z | Draws a straight line from the current endpoint to the first point of the current figure and then ends the figure. Producers SHOULD always close their figures. Consumers MAY ignore any figure that is not closed.<br><br>If the command following a Close command is a Move command, the Move command specifies the initial point of the next figure. Otherwise, the next figure starts at the same initial point as the current figure. |

### 4.3.3. Smooth Bézier Curve Abbreviated Syntax

Smooth Bézier curves specified with the abbreviated geometry syntax are basic cubic Bézier curves with an implied first control point. This control point is coincident with the endpoint of the previous segment unless the previous segment is also a Bézier curve. In this case, the first control point of the smooth Bézier curve is a reflection of the second control point of the previous curve segment around the start point of the smooth Bezier curve segment, as shown below.

In the following figure, $C_1$ and $C_2$ represent the first and second control points of the first cubic Bézier curve segment, respectively. $S_1$ represents the implied first control point of the smooth Bézier curve segment. $S_2$ represents the specified control point of the smooth Bézier curve segment. I represents the inflection point around which control point $S_1$ is derived from control point $C_2$.

*Figure 4–3. Smooth Bézier curve*

### 4.3.4.Relative Commands and Curve Control Points

When using relative (lowercase) commands with the abbreviated geometry syntax, each control point and end point are individually specified relative to the start point of that segment.

### 4.4. Actions

Element **<actions>**

| diagram | |
|---------|---|
| | |

The <actions> element simply contains a series of <actioninvoke> elements for this object, each of which refers to an action resource.

### 4.4.1.Action Invocations

Element **<actioninvoke>**

| diagram | | | | |
|---|---|---|---|---|
| attributes | Name | Type | Use | Annotation |
| | actionid | **xs:nonNegativeInteger** | req'd | Specifies a unique identifier for this texture resource. |
| | x | **ST_Double** | req'd | Specifies the x-value where to apply the action. |
| | y | **ST_Double** | req'd | Specifies the y-value where to apply the action. |
| | z | **ST_Double** | req'd | Specifies the z-value where to apply the action. |
| | data | **xs:string** | | If specified, overrides the data attribute of the referenced action. |

An action invocation specifies to apply the specific action resource at a specified location. See §5.4, "Action Resources" for more information.

**Chapter 5: Other Resources**

This chapter describes the non-object resources. Support for each of these resources is OPTIONAL. A consumer MAY support a resource that can rely on another resource type it doesn't support (e.g. colors and composite materials can rely on texture resources). In those cases, the consumer MAY provide a reasonable default behavior for that unsupported resource.

**5.1. Texture Resources**

Element **<texture>**

| diagram | |
|---|---|

| attributes | Name | Type | Use | Def. | Annotation |
|---|---|---|---|---|---|
| | id | **xs:ID** | req'd | | Specifies a unique identifier for this texture resource. |
| | path | **ST_UriReference** | req'd | | Specifies the part name of the texture data. |
| | width | **xs:nonNegativeInteger** | req'd | | Specifies the width of the texture, in image-relative units. Producers MAY NOT specify a width greater than the width of the related image. The width MAY be narrower than the overall image, in which case only the referenced portion of the image (by width, height, depth, u, v, w) may be extracted. |

(continued)

| attributes | Name | Type | Use | Def. | Annotation |
|---|---|---|---|---|---|
| | height | **xs:nonNegati veInteger** | req'd | | Specifies the height of the texture, in image-relative units. Producers MAY NOT specify a height greater than the height of the related image. The height MAY be narrower than the overall image, in which case only the referenced portion of the image (by width, height, depth, u, v, w) may be extracted. |
| | depth | **xs:nonNegati veInteger** | | 1 | Specifies the depth of the texture, in image-relative units. Producers MAY NOT specify a depth greater than the depth of the related image. The depth MAY be shallower than the overall image, in which case only the referenced portion of the image (by width, height, depth, u, v, w) may be extracted. For images other than TBMPs, the depth MAY be 1 (or omitted). |
| | contenttype | **ST_ContentT ype** | req'd | | Specifies the content type of the 3D Texture part referenced by the path attribute. Valid values are image/jpeg, image/png, image/tiff, or image/vnd.ms-tbmp. |
| | u | **xs:nonNegati veInteger** | | | The horizontal offset, in image coordinate space units, from the upper left corner of the related image to be extracted as a texture resource. |
| | v | **xs:nonNegati veInteger** | | | The vertical offset, in image coordinate space units, from the upper left corner of the related image to be extracted as a texture resource. |
| | w | **xs:nonNegati veInteger** | | | The depth offset, in image coordinate space units, from the top upper left corner of the related image to be extracted as a texture resource. This value MAY be ignored for image types other than TBMP images. This allows for the definition of a 3D texture in a standard 2D image type, primarily for use by complex internal material structures. |
| | scale | **ST_Double** | | | Specifies a scale factor to be applied to the extracted texture rectangle before making it available as a texture resource. |
| | rotation | **ST_Double** | | | Specifies a clockwise rotation factor (in radians) to be applied to the extracted texture rectangle, relative to the upper right corner, before making it available as a texture resource. |

(continued)

| attributes | Name | Type | Use | Def. | Annotation |
|---|---|---|---|---|---|
| | tilestyleu | **ST_TileStyle** | | repeat | Specifies how tiling should occur in the u axis in order to fill the overall requested area. Valid values are none, reflect, repeat. Areas outside the texture when the value is none MAY be fully transparent. |
| | tilestylev | **ST_TileStyle** | | repeat | Specifies how tiling should occur in the v axis in order to fill the overall requested area. Valid values are none, reflect, repeat. Areas outside the texture when the value is none MAY be fully transparent. |
| | tilestylew | **ST_TileStyle** | | repeat | Specifies how tiling should occur in the w axis in order to fill the overall requested area. Valid values are none, reflect, repeat. Areas outside the texture when the value is none MAY be fully transparent. |

A texture resource provides information about texture image data, found via the provided path reference, which MAY also be the target of a 3D Texture relationship from the 3D Model part. It allows specifying a sub-portion of the image data to provide a texture swatch that can be applied as a color or material definition.

The tile style of repeat essentially means that the same texture should be repeated in the specified axis (both in the positive and negative directions), as if the axis value were incremented by the specified width, height, or depth. The tile style of reflect means that each time the texture width, height, or depth is exceeded, the next repetition of the texture should be reflected across a perpendicular plane to the axis in question.

When applied as a material, the image data MAY be black and white (red, green, and blue channels having equal values, set to 0 or 1). Each value specifies that material is present at that location if the value is 0. In this way, producers can define complex, repeating fill microstructures without declaring a mesh definition.

**5.2. Color Resources**

Element **<color>**

| diagram | |
|---|---|
| | |

(continued)

| attributes | Name | Type | Use | Default | Annotation |
|---|---|---|---|---|---|
| | id | **xs:ID** | required | | Specifies a unique identifier for this color resource. |
| | alue | **ST_ColorValue** | | #FFFFFF | Specifies the color value. |

A color resource defines a color to be applied to a material, an object, or a triangle, with that order of precedence. This precedence means that if an object specifies a color, that color supersedes the material color, and a triangle color supersedes an object or material color. Alpha channel (transparency) blending of colors is likewise applied in this order of precedence.

3MF Document producers MAY define colors in the sRGB color space, as well as the scRGB, CMYK, CMYKW, and CMYKWA rich color color spaces. sRGB is the default color space and MAY be supported by all color-aware consumers. A color-aware consumer MAY be able to process all of these color spaces. Consumers are not required to handle all color spaces natively, but rather MAY convert data specified in a rich color space to sRGB at an early stage. Consumers that do not handle rich colors natively may experience reduced fidelity. Because blending between color spaces can lead to variations in appearance among different consumers, producers SHOULD use one color space throughout the 3D Model; consumer blending of rich colors is implementation-defined.

3MF Documents support sRGB and scRGB linear gradients, radial gradients, and triangular gradients. The producer MAY NOT include <gradient> element child unless the color value is set to "gradient".

### 5.2.1.sRGB Color

An sRGB color MAY be specified with a value of a 6 or 8 digit hexadecimal number, e.g. "#RRGGBB" or "#RRGGBBAA" where RR is the red channel with values from 00-FF, GG is the green channel with values from 00-FF, BB is the blue channel with values from 00-FF, and AA is the alpha channel with values from 00-FF (using a value of FF if not specified).

3MF Documents support sRGB textures in the following formats:

- JPEG
- PNG
- TIFF
- TBMP

The default pixel formats, in the absence of an ICC profile or in the presence of an incompatible profile, MAY be treated as follows:

- Integer RGB
- Integer Grayscale
- Integer 3-Channel

### 5.2.2.scRGB Color

A color MAY be specified in the form "scRGB(R G B)" or "scRGB(R G B A)" where R, G, B, and A are numbers in the range [0.0..1.0], meaning fully unsaturated color in that channel to fully saturated color in the channel (alpha channel is 1.0 if not specified). These channels correspond to the red, green, blue, or alpha channels in the scRGB color space.

3MF Documents do not support scRGB textures.

### 5.2.3.CMYK, CMYKW & CMYKWA Color

Similar to scRGB, if the color is in the CMYK, CMYKW, or CMYKWA color spaces, a color value MAY be specified as "CMYK(cyan magenta yellow black)" or "CMYKW(cyan, magenta, yellow, black, white)" or "CMYKWA(cyan, magenta, yellow, black, white, alpha)" where each color is replaced by a number in the range [0.0..1.0].

3MF Documents support CMYK textures only in TIFF 6.0 images; JPEG CMYK images MAY NOT be used. 3MF Documents do not support CMYKW or CMYKWA textures.

ICC profiles can be associated with CMYK raster images by using an ICC profile embedded in the TIFF file (tag 34675).

The default pixel formats for CMYK (with SWOP profile), in the absence of an ICC profile or in the presence of an incompatible profile, MAY be treated as follows:

- Integer CMYK (CMYK only)
- Integer 4-Channel (CMYK only)
- Integer 5-Channel (ignore channel 5 for CMYK but use for CMYKW white channel)
- Integer 6-Channel (ignore channel 6 for CMYK and CMYKW, but use for CMYKWA alpha channel)

### 5.2.4.Texture Color

A color might also be applied to a model pixel-by-pixel from a texture, in which case the color is bound to the texture by specifying tex(TEXID) where TEXID is the texture resource whose id value matches the TEXID value. Note that this only really makes sense for colors applied to triangles or geometries, so consumers MAY treat any tex(TEXID) value as #FFFFFF when it is referenced by an element other than a triangle or geometry.

### 5.2.5.Gradient Color

A gradient color MAY be used in 3MF Documents. There are three types of gradients: triangular gradients, linear gradients, and radial gradients. A gradient is defined by setting the value attribute of the <color> element to the value gradient or gradient(2DMATRIX), where the 2D matrix (see§3.3.1, "2D Matrices") is applied before applying the gradient in a plane parallel to the triangle plane or vertically perpendicular to a geometry segment. By default, the center of a linear gradient or radial gradient is mapped to the center of the triangle or segment. Triangular gradients MAY be used only for triangles and MAY NOT specify a transform matrix, since the endpoints of the gradient are always mapped to the corners of the triangle. If the value is a gradient, the producer MAY specify a child <gradient> element. If it is missing, the consumer MAY treat the color value as #FFFFFF.

Element **<gradient>**

(continued)

| attributes | Name | Type | Default | Annotation |
|---|---|---|---|---|
| | colorinter polationm ode | **ST_ClrInt Mode** | sRgbLinear | Specifies whether gradient stop colors should first be converted to sRGB or scRGB color space prior to interpolation. All interpolation is linear. |
| | spreadm ethod | **ST_Sprea dMethod** | pad | Specifies how the gradient should fill the content area outside of the primary, initial gradient area. Valid values are pad, reflect, and repeat. Pad continues the last color gradient stop specified in that direction. Reflect inverts the gradient stops and continues with a reflected gradient definition. Repeat just applies the same gradient stops in the same order. |
| | gradientty pe | **ST_Gradi entType** | linear | Specifies whether this gradient MAY be interpreted as a linear gradient, a radial gradient, or a triangular gradient. A linear gradient defines a line, perpendicular to which color gradient stops appear as bands. A radial gradient defines an ellipse, where color gradient stops are interpolated from the gradient origin to the edge of the ellipse defined by length and width. A triangular gradient assigns a color gradient stop to each corner of a triangle, interpolating between them. A triangular gradient MAY NOT be applied to an element other than a triangle. |
| | width | **ST_Doubl e** | | The length of the linear gradient line, or the width of the ellipse of a radial gradient. This attribute MAY NOT appear for a triangular gradient. |
| | height | **ST_Doubl e** | | The height of the ellipse for a radial gradient. This attribute MAY NOT appear for linear gradients or triangular gradients. |
| | origin | **ST_Point** | | The gradient origin for a radial gradient, it is a point relative to the center of the width and height attribute values. This attribute MAY NOT appear for linear gradients or triangular gradients. |

If a gradient stop with an offset of 0.0 is omitted, an implicit offset exists at 0.0 with the same color value as the next highest gradient stop offset. If a gradient stop with an offset of 1.0 is omitted, an implicit offset exists at 0.0 with the same color value as the next lowest gradient stop offset.

**5.2.5.1. Gradient Stops**

Element **<gradientstop>**

| diagram | | | | |
|---|---|---|---|---|
| attributes | Name | Type | Use | Annotation |
| | color | **ST_ColorValueSimple** | required | Specifies the sRGB or scRGB color value for the gradient stop. Other color spaces are not supported. |
| | offset | **ST_ZeroToOne** | required | Specifies a value, from 0.0 to 1.0 of the relative distance where the color interpolation end point is to occur for this color. For example, a value of 0.5 would cause a linear gradient to change to this color in the exact center of its length. A value of 0.0 maps to the left endpoint of the width and a value of 1.0 maps to the right endpoint of the width. A value of 0.5 would cause a radial gradient to change to this color exactly halfway between the gradient origin and the ellipse border defined by half the width and length attributes interpreted as radii, from the center of these values. A radial gradient offset of 0.0 is equivalent to the perimeter of the ellipse; an offset of 1.0 is equivalent to the gradient origin. |

A producer MAY specify gradientstops with duplicate offsets, in which case the relative ordering of these offsets is determined by the markup order. A triangular gradient MAY specify exactly 3 gradient stops, with the values 0.0,0.5, and 1.0, which correspond to v1, v2, and v3 respectively.

Gradient stops SHOULD be sorted by the producer from lowest to highest.

**5.2.6.ICC Profiles**

3MF Documents MAY embed ICC profile data in the appropriate metadata of the <color> element. ICC profiles MAY conform to the requirements of the ICC Color Profile specification, Version 3.4. Producers that embed ICC profiles MAY ensure the XML encoding is appropriate for the profile.

Consumers MAY support color profiles as specified in the ICC specification. However, the set of usable N-Component LUT-based profiles is limited to 3-, 4-, or 5-, or 6-color channels.

All ICC profiles used in 3MF Documents MAY be one of the following:

- Input
- Output
- Monitor (RGB)
- ColorSpace Conversion

ICC profiles SHOULD be used when embedded in any texture image format with any color space.

### 5.3. Material Resources

Element **<material>**

| diagram | |
|---|---|
| | |

| attributes | Name | Type | Use | Annotation |
|---|---|---|---|---|
| | id | **xs:ID** | req'd | Specifies a unique identifier for this material resource. |
| | colorid | **xs:nonNe gativeInt eger** | | References the color resource with the matching id attribute value. A consumer that does not support multiple colors MAY ignore the color information. A consumer that only supports textured materials but not different color materials MAY still use the color only for texture references. If omitted, the color MAY be considered to be #FFFFFF. |
| | dimensions | **ST_Vecto r** | | Specifies the physical dimensions (x,y,z) of a solid material, for subtractive 3D manufacturing devices. Additive 3D manufacturing devices SHOULD ignore this attribute. |
| | type | **ST_Mater ialType** | | Specifies the type of material. Valid values include ABS, PLA, PVA, powder, composite, solidwood, and solidmetal. Producers MAY NOT specify composite if they do not provide <composite> child elements to define the composite. Solidwood and solidmetal are intended for subtractive 3D manufacturing processes. |
| | hardness | **ST_Mater ialHardne ss** | | Specifies the Mohs hardness value of a material, particularly to aid subtractive 3D manufacturing devices in selecting appropriate tools. It MAY be ignored by the consumer. |

A material resource is used to define the specific material to be used for manufacturing certain objects in a model. In particular, support volumes are often built from a different material than the non-sacrificial portion of the model.

### 5.3.1.Composite Materials

Element **<composite>**

| diagram | |
|---|---|
| | CT_Composite — attributes — materialid — value — composite — metadata 0..∞ |

| attributes | Name | Type | Use | Default | Fixed | Annotation |
|---|---|---|---|---|---|---|
| | materialid | **xs:nonNegativeInteger** | required | | | References the material resource with the matching id attribute value |
| | value | **ST_ZeroToOne** | required | | | Specifies a proportion of the overall mix of materials this material represents, in the range [0.0-1.0]. |

Sometimes, a material is derived by mixing 2 or more other materials in defined ratios. This collective mixture is referred to as a composite material. Each <composite> element represents one component in that composite material. The value attribute of the <composite> element specifies the proportion of the overall mixture this material represents. If the sum of all composite value attributes is greater than zero, consumers MAY divide each value by the sum the values of all composite value attributes to apply the correct proportion for each material. If the sum of all composite value attributes is zero, each value MAY be treated as 1.0 divided by the number of composite elements.

A consumer MAY choose not to support composite materials, in which case the consumer MAY use the first material in the composite element list as the entire material. Producers are therefore RECOMMENDED to put the fallback or default material first in the list of <composite> elements.

### 5.4. Action Resources

Element **action**

| | Name | Type | Use | Annotation |
|---|---|---|---|---|
| attributes | id | **xs:ID** | required | Specifies a unique identifier for this action resource. |
| | type | **ST_ActionType** | required | Specifies the nature of the action. Valid values include insert (add an external component to the model), remove (an object from the output area), assemble (one object with another object), use (a tool on the model), or other (defined in metadata for a target consumer). |
| | name | **xs:QName** | required | The namespace-prefixed definition of the full behavior of the action |
| | data | **xs:string** | | If the action requires configuration parameters, they MAY be passed using this attribute. This attribute is used as the default value for data in all action invocations, except those where data is explicitly provided by the action invocation. |

An action is an operation that may be performed as part of outputting a model. It might include inserting a pre-constructed physical component into the model, it might be applying a tool at a specific location, it might be removal of the model from the output area, or it might be any number of other actions specific to a particular 3D manufacturing device. An action resource describes the nature of the action; it is invoked by an <actioninvoke> element within a specific object at a specific location within that object. See §4.4.1, "Action Invocations."

Actions are primarily intended to facilitate workflows between software and hardware intended to work together. There are no actions defined in this specification, although supplemental actions may be published at a later time under a new namespace. Consumers who do not understand actions at all MAY ignore them. Consumers MAY also ignore any action that they do not understand, meaning the name attribute value is drawn from a namespace unrecognized by that consumer. Editors who modify the object SHOULD remove any action and corresponding action invocations that they do not recognize.

**Chapter 6: Metadata**

It is often useful to producers and consumers of 3MF Documents to provide additional information about textures, colors, materials, composites, objects, vertices, triangles, geometries, components, and buildable items. This metadata takes two forms:

•   3MF Document Specific Metadata - A set of data, identified via a name defined by this specification and containing data compliant with this specification for each named metadata entry.

- Producer or Consumer Defined Metadata - An extensible set of data, identified by a namespace-scoped name and containing an arbitrary node of XML-compliant data, which may include text data, base-64 encoded binary data, or even XML data defined by the owner of the namespace.

## 6.1. Metadata

Element **<metadata>**

| diagram | | | | |
|---|---|---|---|---|
| attributes | Name | Type | Use | Annotation |
| | name | **xs:QName** | required | Contains either the well-known name of the metadata defined by this specification (see Table 8-1 below) or vendor-defined metadata, which MAY be prefixed with a valid XML namespace name declared on the <model> element. |

Metadata in 3MF Documents without a namespace name is restricted to names and values defined by this specification. If a name value is not defined in this specification, it MAY be prefixed with the namespace name of an XML namespace declaration on the <model> element. The valid metadata names and content defined by this specification include:

*Table 8-1. Metadata values*

| Context | Name |
|---|---|
| Texture | Designer |
| | Copyright |
| | Creation Date |
| | ModficationDate |
| Color | ICCInputProfile |
| | ICCOutputProfile |
| | ICCMonitorProfile |
| | ICCColorSpaceProfile |
| Material | MaterialName |
| | MaterialColor |
| | MaterialThickness |
| Composite | MaterialName |
| | MaterialColor |
| | MaterialThickness |
| Object | Designer |
| | Copyright |
| | Creation Date |
| | ModficationDate |

49

(continued)

| Context | Name |
|---------|------|
| Triangle | Normal |
| Vertex | Normal |
| Component | Designer |
| | Copyright |
| | Creation Date |
| | ModficationDate |

Consumers MAY ignore any metadata with a name they do not recognize, typically from a future version of this specification or an unrecognized producer or target consumer. Contents of this element MAY be mixed, but if XML elements and attributes are used, they MAY be drawn from the namespace matching the name attribute value's namespace name, which further MAY be declared on the <model> element of this 3D Model part's markup.

Some producers might wish to communicate additional information about various components of a 3D object definition. This is particularly true of producers that wish to enhance the output on a specific 3D manufacturing device. The content of the <metadata> element can be any valid contents of an XML element, e.g. a string, base-64 encoded binary data, or XML data. Consumers MAY NOT try to parse the contents of a <metadata> element unless they recognize the namespace of the metadata.

A consumer that wishes to receive additional information using this mechanism SHOULD publish a namespace URI and a set of well-defined metadata names and expected content in order for producers to generate content in an expected fashion.

## Chapter 7. 3MF Document Package Features

3MF Documents take advantage of parts defined by the Open Packaging Conventions to provide additional information about the content in the package.

### 7.1. Thumbnail

The producer of a 3MF document MAY include a 2D thumbnail image representing the contents of the 3D payload. This image may be of content type image/jpeg or image/png, following the same internal file format requirements and restrictions as those described in Section 5.1, "Texture Resources".

This thumbnail has a relationship from the package root to the thumbnail image. The relationship type MAY be: http://schemas.openxmlformats.org/package/2006/relationships/metadata/thumbnail

The thumbnail can be accessed and displayed by external systems, such as the operating system's file explorer, a model browser, or a print queue preview utility.

### 7.2. Core Properties

The 3MF Document format relies on the Core Properties part, defined in the Open Packaging Conventions specification, to provide metadata about the creation time, modification time, author, search keywords, and other document-centric metadata. See the Open Packaging Conventions specification for additional details.

### 7.3. Digital Signatures

3MF Documents may contain one or more digital signatures. A digital signature provides a mechanism to verify that a 3MF Document has not been tampered with since it was signed. The absence of a digital signature cannot prove that a 3MF Document was never signed.

The Open Packaging Conventions specification provides full details of how digital signatures are applied in OPC packages. The Digital Signature Origin part acts as the root of the digital signature payload in the 3MF Document. Individual Digital Signature parts can be discovered via relationship from the Digital Signature Origin part. Each Digital Signature part can have either an inline digital certificate, or a reference to an external Digital Signature Certificate part in the package.

A digital signature applied to the 3D Model part SHOULD include only the 3D Model part, all 3D Texture parts, and the 3D Texture relationships in the 3D Model relationships part. It MAY include the Thumbnail, Digital Signature Origin, Core Properties parts and associated relationship parts.

### 7.3.1. Normalization

Before applying or verifying a digital signature on the contents of the 3D Model part, the XML therein MAY first be normalized, which is equivalent to XML canonicalization according to XML C14N requirements.

### Glossary

**2D matrix.** A 3x3 affine matrix used for scaling, translating, and rotating (on the same plane) geometry templates before applying the data to a given geometry.

**3D matrix.** A 4x4 affine matrix used for rotating, scaling, and translating an object in three-dimensional space.

**3D model.** The markup that defines a model for output.

**3D Model part.** The OPC part that contains a 3D model.

**3D Texture part.** The OPC part that contains a texture in the form of a raster image, e.g. JPEG, PNG, TIFF, or TBMP formats.

**3MF.** The 3D Manufacturing Format described by this specification, defining one or more 3D objects intended for output to a physical form.

**3MF Document.** The digital manifestation of an OPC package that contains a 3D payload that conforms with the 3MF specification.

**3MF Document StartPart relationship.** The OPC relationship from the root of the package to the 3D Model part.

**Abbreviated geometry syntax.** An SVG-like syntax that describes a 2D geometry in a compact form.

**Action.** The notion of an activity that should be performed in conjunction with the output of a 3D object, such as adding an external component inside the object, removing an object from its output platform or bed, assembling two objects, or any number of extensible possibilities.

**Action invocation.** The instruction to perform a specified action at a particular location in 3D space.

**Action resource.** The description of an action that could be performed, referenced from an object resource.

**Assembly.** A model that contains two or more independently-defined objects that are connected or interlocked either during or after the 3D manufacturing process is complete. An assembly might be able to be reversed or the individual parts may be inseparably interlocked.

**Back.** The maximum printable XZ plane of the print area or the correspondent maximum plane of a model bounding box, once transformed to the output coordinate space.

**Bottom.** The minimum printable XY plane of the print area or the correspondent minimum plane of a model bounding box, once transformed to the output coordinate space.

**Color resource.** A color that could be used for all or part of an object.

**Component.** An object that is added as an intact shape to the overall definition of another object.

**Composite material.** A material that is comprised of a ratio of other materials.

**Consumer.** A software, service, or device that reads in a 3MF Document.

**Core properties.** The well-defined set package (OPC) properties that define metadata about the package as a whole, such as the author, the last modified time, and so on.

**Digital signatures.** A mechanism that, when present, can be used to validate that a part or payload has not been tampered with or changed since the digital signature was applied.

**Editor.** A software, service, or device that both reads in and writes out 3MF Documents, possibly changing the content in between.

**Figure.** A set of polygons or multi-segment lines (including curves). One or more figures comprise a geometry.

**Fill rule.** The algorithm used to determine whether any particular point is considered to be "inside" the geometry or not.

**Front.** The minimum printable XZ plane of the print area or the correspondent minimum plane of a model bounding box, once transformed to the output coordinate space.

**Geometry.** A set of single enclosed shape or unclosed, multi-segment lines expressed as figures. One or more geometries define a slice.

**Geometry template.** A description of a geometry that is not output on its own, but rather is intended to be referenced and reused by actual geometries.

**Left.** The minimum printable YZ plane of the print area or the correspondent minimum plane of a model bounding box, once transformed to the output coordinate space.

**Material.** The description of a physical substance that can be used to output an object.

**Material resource.** A potential resource that might be referenced by an object to describe what the object will be made of.

**Mesh.** A triangular tessellation of an object's surface.

**Metadata.** Ancillary information about some portion of the model, to provide more refined processing by knowledgeable producers or consumers.

**Model.** The set of objects that are to be manufactured as part of a single job. This may include a single object, multiple instances of the same object, multiple different objects, or multiple objects in an assembly.

**Object resource.** A single 3D shape that could be output by a 3D manufacturing device or used as a component in another object resource.

**Payload.** A complete collection of interdependent parts and relationships within a package.

**PrintTicket.** The contents of a PrintTicket part. Conforms to the Print Schema Specification. It is RECOMMENDED to use the standard Print Schema Keywords for 3D Manufacturing when possible.

**PrintTicket part.** The PrintTicket part provides settings used when the 3MF Document is printed.

**Primary 3D payload root.** The 3D payload discovered by the 3MF Document StartPart relationship.

**Producer.** A software, service, or device that writes out a 3MF Document.

**Protected resource.** A resource that is protected according to the protection type and placed in the <protectedresources> element.

**Protection authority.** The owner of the protection mechanism described by the protection type. This may be the producer that originally protected the file, the consumer that defines what protection mechanism will be accepted, or a third-party protection service, such as a digital rights management service.

**Protection namespace.** The XML namespace that the protection type and associated metadata are drawn from. It is declared on the <model> element.

**Protection type.** The qualified name for a protection mechanism that has been applied to the resources and textures of the 3MF Document. This could be as simple as an XOR obfuscation or as complex as a full digital rights management solution. The valid protection types are not defined in this specification and are implementation dependent.

**Resource.** A texture, color, material, action, or object that could be used by another resource or might be necessary to build a physical 3D object according to build instructions.

**Rich color.** Color in the scRGB, CMYK, CMYKW, or CMYKWA color spaces.

**Right.** The maximum printable YZ plane of the print area or the correspondent maximum plane of a model bounding box, once transformed to the output coordinate space.

**Segment.** One of a set of lines and curves that collectively define a figure.

**Slice.** A 2D plane through an object, with a fixed slice height. Defined by one or more geometries. **Support.** Fused filament deposition printers require supporting scaffolding for overhanging areas in the model so that filament does not fall to the platform or model below when it is extruded; this scaffolding is referred to as exterior support.

**Texture.** An image in JPEG, PNG, TIFF, or TBMP format that is used to provide raster image coloring of a triangle or geometry or is used to define the internal fill-material substructure of an object.

**Texture resource.** A resource in an object that describes the basic size and location of the texture image data.

**Thumbnail.** An image that helps end-users identify the contents of the package, expressed as a JPEG or PNG image.

**Thumbnail part.** The OPC part that contains the package thumbnail image.

**Top.** The maximum printable XY plane of the print area or the correspondent maximum plane of a model bounding box, once transformed to the output coordinate space.

**XML namespace.** A namespace declared on the <model> element, in accordance with the XML Namespaces specification.

## Claims

1. A method performed by a computing device for enabling arbitrary applications (106) on the computing device to print to arbitrary 3D manufacturing devices (104) connected with the computing device, the method comprising:

   executing an operating system (100), the operating system (100) receiving requests from the arbitrary applications (106) that are directed to a 3D manufacturing device (104);

   **characterized by**
   receiving a request from an application (106), the request comprising a 3D model in a standard format recognized by one or more printing components of the operating system (100);
   exporting, by the arbitrary application (106), the 3D model data;
   packaging the 3D model data and a print ticket in a print package for printing, the print ticket specifying the 3D manufacturing device (104);

the operating system (100) directing the requests to a device driver (156) of the 3D manufacturing device (104); and the device driver (156) interpreting the requests into machine instructions of the 3D manufacturing device (104).

2. The method according to claim 1, wherein the operating system (100) comprises a spooling service, the method further comprising receiving a request by the spooling service and the spooling service parsing the request to identify a 3D manufacturing device (104) to which the request is directed.

3. A computing device comprising storage storing information, the information comprising:

   an operating system (100), the operating system (100), when executed, able to receive 3D print requests from arbitrary applications executing on the computing device and direct the requests to arbitrary 3D manufacturing devices (104),
   **characterized in that** when executed the operating system (100) receives a request from an application (106) to print a 3D model and the operating system (100) responds according to a print ticket associated with the request and corresponding to a 3D manufacturing device (104) specified by the application (106), the print ticket conforming to a standard print schema implemented by the operating system (100), wherein the 3D model and the print ticket are packaged in a print package.

4. The computing device according to claim 3, the operating system (100) further comprising device drivers (156) of the respective 3D manufacturing devices (104), wherein a device driver (156) interprets 3D models in a standard format to corresponding set of instructions executable or interpretable by a 3D manufacturing device (104)being driven by the device driver (156).

5. The computing device according to claim 3, wherein, for any arbitrary application (106) and any arbitrary 3D manufacturing device (104), the operating system (100) communicates with the arbitrary application (106) and the 3D manufacturing device (104) to enable the application (106) to render and display a graphic preview of the 3D model.

6. The computing device according to claim 5, wherein the graphic preview corresponds to an appearance the 3D model would have if printed by the 3D manufacturing device (104) according to settings for the 3D manufacturing device (104) that are provided by the application (106).

7. The computing device according to claim 3, wherein the operating system (100) provides a user interface (108) that enables a user of the computing device to configure and manage arbitrary 3D manufacturing devices (104) connected with the computing device.

8. A computing device comprising storage storing information, the information comprising:

   an operating system (100), the operating system (100), when executed, able to receive 3D print requests from arbitrary applications (106) executing on the computing device and direct the requests to arbitrary 3D manufacturing devices (104);
   **characterized in that,** for any arbitrary application (106) and any arbitrary 3D manufacturing device (104), the operating system (100) communicates with the arbitrary application and the 3D manufacturing device (104) to enable the application (106) to render and display a graphic preview of the 3D model according to a print request, wherein the graphic preview corresponds to an appearance the 3D model would have if printed by the 3D manufacturing device (104) according to settings for the 3D manufacturing device (104) that are provided by the application (106);
   wherein the print request comprises a print package that packs the 3D model and a print ticket comprising the settings corresponding to the 3D manufacturing device (104) and conforming to a standard print schema implemented by the operating system (100).

**Patentansprüche**

1. Von einer Datenverarbeitungsvorrichtung durchgeführtes Verfahren, das beliebigen Anwendungen (106) auf der Datenverarbeitungsvorrichtung ermöglicht, auf beliebigen 3D-Fertigungsvorrichtungen (104), die mit der Datenverarbeitungsvorrichtung verbunden sind, zu drucken, das Verfahren umfassend:

   das Ausführen eines Betriebssystems (100), wobei das Betriebssystem (100) Anfragen, die an eine 3D-Fertigungsvorrichtung (104) gerichtet sind, von der beliebigen Anwendung (106) erhält;

**gekennzeichnet durch**
das Erhalten einer Anfrage von einer Anwendung (106), wobei die Anfrage ein 3D-Modell in einem Standardformat, das von einer oder mehreren Druckkomponenten des Betriebssystems (100) erkannt wird, umfasst;
das Exportieren der 3D-Modelldaten durch die beliebige Anwendung (106) ;
das Packen der 3D-Modelldaten und eines Drucktickets in einem Druckpaket für das Ausdrucken, wobei das Druckticket die 3D-Fertigungsvorrichtung (104) festlegt;
das Richten der Anfrage durch das Betriebssystem (100) an einen Gerätetreiber (156) der 3D-Fertigungsvorrichtung (104); und
das Interpretieren der Anfragen durch den Gerätetreiber (156) in Maschinenbefehle der 3D-Fertigungsvorrichtung (104).

2. Verfahren nach Anspruch 1, worin das Betriebssystem (100) einen Spool-Dienst umfasst, und das Verfahren weiter das Erhalten einer Anfrage durch den Spool-Dienst und das Auswerten/Analysieren der Anfrage durch den Spool-Dienst zur Erkennung einer 3D-Fertigungsvorrichtung (104), an welche die Anfrage gerichtet ist, umfasst.

3. Datenverarbeitungsvorrichtung umfassend einen Informationen speichernden Speicher, die Informationen umfassend:

ein Betriebssystem (100), wobei das Betriebssystem (100), wenn es ausgeführt wird, fähig ist 3D-Druckanfragen von beliebigen Anwendungen, die auf der Datenverarbeitungsvorrichtung ausgeführt werden, zu erhalten, und die Anfragen an beliebige 3D-Fertigungsvorrichtungen (104) zu richten,
**dadurch gekennzeichnet, dass** das Betriebssystem (100), wenn es ausgeführt wird, eine Anfrage zum Ausdrucken eines 3D-Modells von einer Anwendung (106) erhält und das Betriebssystem (100) gemäß einem der Anfrage zugeordneten und einer von der Anwendung (106) festgelegten 3D-Fertigungsvorrichtung (104) entsprechenden Druckticket reagiert, das Druckticket einem vom Betriebssystem (100) angewendeten Standarddruckschema entspricht, wobei das 3D-Modell und das Druckticket in ein Druckpaket gepackt sind.

4. Datenverarbeitungsvorrichtung nach Anspruch 3, das Betriebssystem (100) weiter umfassend Gerätetreiber (156) der betreffenden 3D-Fertigungsvorrichtungen (104), wobei ein Gerätetreiber (156) 3D-Modelle in einem Standardformat in entsprechende Anweisungen interpretiert, die von einer 3D-Fertigungsvorrichtung (104), die vom Gerätetreiber (156) betrieben wird, ausgeführt oder interpretiert werden können.

5. Datenverarbeitungsvorrichtung nach Anspruch 3, wobei das Betriebssystem (100) für jede beliebige Anwendung (106) und jede beliebige 3D-Fertigungsvorrichtung (104) mit der beliebigen Anwendung (106) und der 3D-Fertigungsvorrichtung (104) kommuniziert, um der Anwendung (106) zu ermöglichen, eine grafische Vorschau des 3D-Modells wiederzugeben und anzuzeigen.

6. Datenverarbeitungsvorrichtung nach Anspruch 5, wobei die grafische Vorschau einer Erscheinung entspricht, welche das 3D-Modell hätte, wenn es von der 3D-Fertigungsvorrichtung (104) gemäß den Einstellungen für die 3D-Fertigungsvorrichtung (104), die von der Anwendung (106) bereitgestellt werden, ausgedruckt werden würde.

7. Datenverarbeitungsvorrichtung nach Anspruch 3, wobei das Betriebssystem (100) eine Bedienerschnittstelle (108) bereitstellt, welche einem Benutzer der Datenverarbeitungsvorrichtung ermöglicht, beliebige 3D-Fertigungsvorrichtungen (104), die mit der Datenverarbeitungsvorrichtung verbunden sind, einzurichten und zu steuern.

8. Datenverarbeitungsvorrichtung umfassend einen Informationen speichernden Speicher, die Informationen umfassend:

ein Betriebssystem (100), wobei das Betriebssystem (100), wenn es ausgeführt wird, fähig ist 3D-Druckanfragen von beliebigen Anwendungen (106), die auf der Datenverarbeitungsvorrichtung ausgeführt werden, zu erhalten, und die Anfragen an beliebige 3D-Fertigungsvorrichtungen (104) zu richten;
**dadurch gekennzeichnet, dass**, das Betriebssystem (100) für jede beliebige Anwendung (106) und jede beliebige 3D-Fertigungsvorrichtung (104) mit der beliebigen Anwendung und der 3D-Fertigungsvorrichtung (104) kommuniziert, um der Anwendung (106) zu ermöglichen, eine grafische Vorschau des 3D-Modells gemäß einer Druckanfrage wiederzugeben und anzuzeigen, wobei die grafische Vorschau einer Erscheinung entspricht, welche das 3D-Modell hätte, wenn es gemäß den Einstellungen für die 3D-Fertigungsvorrichtung (104), die

**EP 3 013 563 B1**

von der Anwendung (106) bereitgestellt werden, durch die 3D-Fertigungsvorrichtung (104) ausgedruckt werden würde;

wobei die Druckanfrage ein Druckpaket umfasst, in welches das 3D-Modell und ein Druckticket umfassend die Einstellungen für die 3D-Fertigungsvorrichtung (104) und entsprechend einem vom Betriebssystem (100) angewendeten Standardprintschema, gepackt sind.

**Revendications**

1.  Procédé mis en oeuvre par un dispositif informatique pour permettre à des applications arbitraires (106) sur le dispositif informatique de réaliser des impressions vers des dispositifs de fabrication 3D arbitraires (104) connectés au dispositif informatique, le procédé comprenant l'étape ci-dessous consistant à :

    exécuter un système d'exploitation (100), le système d'exploitation (100) recevant des demandes, en provenance d'applications arbitraires (106), qui sont destinées à un dispositif de fabrication 3D (104) ;
    **caractérisé par** les étapes ci-dessous consistant à :

    recevoir une demande en provenance d'une application (106), la demande comportant un modèle 3D dans un format standard reconnu par un ou plusieurs composants d'impression du système d'exploitation (100) ;
    exporter, par le biais de l'application arbitraire (106), les données de modèle 3D ;
    emballer les données de modèle 3D et un ticket d'impression dans un paquet d'impression à imprimer, le ticket d'impression spécifiant le dispositif de fabrication 3D (104);
    le système d'exploitation (100) dirigeant les demandes vers un pilote de dispositif (156) du dispositif de fabrication 3D (104) ; et
    le pilote de dispositif (156) interprétant les demandes sous la forme d'instructions-machine du dispositif de fabrication 3D (104).

2.  Procédé selon la revendication 1, dans lequel le système d'exploitation (100) comporte un service d'impression différée, le procédé comportant en outre l'étape consistant à recevoir une demande, par le biais du service d'impression différée, et le service d'impression différée analysant la demande en vue d'identifier un dispositif de fabrication 3D (104) vers lequel la demande est dirigée.

3.  Dispositif informatique comportant un magasin de stockage stockant des informations, les informations comportant :

    un système d'exploitation (100), le système d'exploitation (100), lorsqu'il est exécuté, étant apte à recevoir des demandes d'impression 3D en provenance d'applications arbitraires s'exécutant sur le dispositif informatique, et à diriger les demandes vers des dispositifs de fabrication 3D arbitraires (104) ;
    **caractérisé en que,** lorsqu'il est exécuté, le système d'exploitation (100) reçoit une demande en provenance d'une application (106), visant à imprimer un modèle 3D, et le système d'exploitation (100) répond selon un ticket d'impression associé à la demande et correspondant à un dispositif de fabrication 3D (104) spécifié par l'application (106), le ticket d'impression étant conforme à un schéma d'impression standard mis en oeuvre par le système d'exploitation (100), dans lequel le modèle 3D et le ticket d'impression sont emballés dans un paquet d'impression.

4.  Dispositif informatique selon la revendication 3, dans lequel le système d'exploitation (100) comporte en outre des pilotes de dispositifs (156) des dispositifs de fabrication 3D respectifs (104), dans lequel un pilote de dispositif (156) interprète des modèles 3D dans un format standard sous la forme d'un ensemble correspondant d'instructions exécutables ou interprétables par un dispositif de fabrication 3D (104) commandé par le pilote de dispositif (156).

5.  Dispositif informatique selon la revendication 3, dans lequel, pour toute application arbitraire (106) et tout dispositif de fabrication 3D arbitraire (104), le système d'exploitation (100) communique avec l'application arbitraire (106) et le dispositif de fabrication 3D (104) afin de permettre à l'application (106) de restituer et d'afficher un aperçu graphique du modèle 3D.

6.  Dispositif informatique selon la revendication 5, dans lequel l'aperçu graphique correspond à une apparence qu'aurait le modèle 3D s'il était imprimé par le dispositif de fabrication 3D (104) selon des paramètres pour le dispositif de fabrication 3D (104) qui sont fournis par l'application (106).

**7.** Dispositif informatique selon la revendication 3, dans lequel le système d'exploitation (100) fournit une interface utilisateur (108) qui permet à un utilisateur du dispositif informatique de configurer et de gérer des dispositifs de fabrication 3D arbitraires (104) connectés au dispositif informatique.

**8.** Dispositif informatique comportant un magasin de stockage stockant des informations, les informations comportant :

un système d'exploitation (100), le système d'exploitation (100), lorsqu'il est exécuté, étant apte à recevoir des demandes d'impression 3D en provenance d'applications arbitraires (106) s'exécutant sur le dispositif informatique, et à diriger les demandes vers des dispositifs de fabrication 3D arbitraires (104) ;
**caractérisé en ce que,** pour toute application arbitraire (106) et tout dispositif de fabrication 3D arbitraire (104), le système d'exploitation (100) communique avec l'application arbitraire et le dispositif de fabrication 3D (104) en vue de permettre à l'application (106) de restituer et d'afficher un aperçu graphique du modèle 3D selon une demande d'impression, dans lequel l'aperçu graphique correspond à une apparence qu'aurait le modèle 3D s'il était imprimé par le dispositif de fabrication 3D (104) selon des paramètres pour le dispositif de fabrication 3D (104) qui sont fournis par l'application (106) ;
dans lequel la demande d'impression comporte un paquet d'impression qui emballe le modèle 3D et un ticket d'impression comportant les paramètres correspondant au dispositif de fabrication 3D (104) et en conformité avec un schéma d'impression standard mis en oeuvre par le système d'exploitation (100).

**open ended 3D modeling**

**printing with 3d model and device abstraction**

**any 3D manufacturing devices**

logic for model content authoring;

UI for printer selection and configuration;

UI for print preview;

106

app1

app2

appN

user

108 printer management UI

100

operating system (print services)

driver framework;

print queueing and spooling;

adaptations to recognize 3D print content;

bidirectional communication between apps and devices/drivers

102

104

3D manu. device1

3D manu. device2

3D manu. deviceN

execute device instructions to produce 3D item corresponding to 3D model

**FIG. 1**

**106**

3D printing desktop app

**154**

spooler service

bidi request/ response

3MF

**150**

3D printing platform API

spool files

**152**

client spooler

3MF

**166**

bidirectional driver API

filter pipeline manager **158**

filter1 ~ **156**
~ **160**

filter2

status queries/ responses

filterN

**162**

3MF/PDL

**104**

standard port monitor

3D device

**164**

3MF/PDL

client app process | spooler server process | rendering filter hosting process

ISV

OS

OS/ISV

**FIG. 2**

58

**FIG. 3**

**FIG. 4**

**FIG. 5**

**EP 3 013 563 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120224755 A1
- EP 1376331 A2

- US 20090303507 A1